(19) Europäisches Patentamt
European Patent Office
Office européen des brevets

(11) **EP 2 909 503 B1**

(12) **EUROPÄISCHE PATENTSCHRIFT**

(45) Veröffentlichungstag und Bekanntmachung des Hinweises auf die Patenterteilung:
**23.11.2016 Patentblatt 2016/47**

(51) Int Cl.:
*F16F 15/12* *(2006.01)*      *F16F 15/14* *(2006.01)*
*F16F 15/121* *(2006.01)*

(21) Anmeldenummer: **13776495.7**

(22) Anmeldetag: **14.10.2013**

(86) Internationale Anmeldenummer:
**PCT/EP2013/071417**

(87) Internationale Veröffentlichungsnummer:
**WO 2014/060349 (24.04.2014 Gazette 2014/17)**

(54) **DREHSCHWINGUNGSDÄMPFUNGSANORDNUNG MIT DREHZAHLABHÄNGIGER CHARAKTERISTIK**

TORSIONAL VIBRATION DAMPER ASSEMBLY WITH SPEED-DEPENDENT CHARACTERISTIC

DISPOSITIF AMORTISSEUR DE VIBRATIONS DE TORSION AYANT UNE CARACTÉRISTIQUE FONCTION DE LA VITESSE DE ROTATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.10.2012 DE 102012218918**

(43) Veröffentlichungstag der Anmeldung:
**26.08.2015 Patentblatt 2015/35**

(73) Patentinhaber: **ZF Friedrichshafen AG**
**88046 Friedrichshafen (DE)**

(72) Erfinder:
• **DÖGEL, Thomas**
**97720 Nüdlingen (DE)**
• **GROSSGEBAUER, Uwe**
**97250 Erlabrunn (DE)**
• **ORLAMÜNDER, Andreas**
**97453 Schonungen (DE)**

(56) Entgegenhaltungen:
DE-A1- 3 023 300      DE-A1- 19 919 458
DE-A1-102010 038 782   DE-A1-102010 053 542

**Beschreibung**

Ausführungsbeispiele der vorliegenden Erfindung befassen sich mit einer Drehschwingungsdämpfungsanordnung, insbesondere für einen Antriebsstrang eines Fahrzeugs.

Zur Erhöhung des Fahrkomforts bzw. zur weiteren Unterdrückung von Schwingungen im Antriebsstrang werden häufig drehmomentübertragende Torsionsschwingungsdämpfer und darüber hinaus auch sogenannte Schwingungstilger bzw. Drehschwingungsdämpfungsanordnungen verbaut. Bei solchen Schwingungstilgern bzw. Tilgern handelt es sich, allgemein gesprochen, um Zusatzmassen, die über ein Federsystem an das Antriebssystem bzw. den Torsionsschwingungsdämpfer angekoppelt werden. Die Wirkungsweise eines Schwingungstilgers beruht dabei beispielsweise darauf, dass ein schwingungsfähiges System, das aus einer Hauptmasse und einer Zusatzmasse besteht, bezüglich seiner Eigenfrequenz so abgestimmt ist, dass bei einer bestimmten Erregerfrequenz die nachfolgend auch als Tilgergewicht oder Auslenkungsmasse bezeichnete Zusatzmasse eine erzwungene Schwingung ausführt, während die Hauptmasse in Ruhe bleibt, so dass solche Schwingungsfrequenzen effizient unterdrückt werden können.

Um die Schwingungsunterdrückung über einen größeren Drehzahlbereich zu erreichen, werden drehzahladaptive Schwingungstilger bzw. Tilger verwendet, deren Eigenfrequenz bzw. Resonanzfrequenz sich drehzahlabhängig, beispielsweise proportional zur Drehzahl, ändert. Unter einem Schwingungstilger bzw. einer Drehschwingungsdämpfungsanordnung wird hierin mithin eine Einrichtung bzw. Vorrichtung oder Anordnung von Komponenten verstanden, mittels derer kein Drehmoment übertragen wird, und die in der Lage ist, bei einer bestimmten, möglicherweise veränderlichen Schwingungsfrequenz Energie aus dem Antriebsstrang zu entnehmen, um bei dieser Frequenz auftretende Drehschwingungen zu unterdrücken.

Um bei einer derartigen Drehschwingungsdämpfungsanordnung eine von der Drehzahl abhängige Schwingungsunterdrückung zu erzielen, schlägt beispielsweise die Deutsche Patentanmeldung 10 2010 053 542 A1 vor, ein um eine Drehachse drehbares Schwungrad und eine zum Schwungrad in Umfangsrichtung relativ bewegliche Pendelmasse über einen Pendelarm zu verbinden, der sich im Wesentlichen radial erstreckt und sich elastisch deformieren kann. Der Pendelarm ist um einen Pendelpunkt in der Umfangsrichtung elastisch pendelbar, wobei die Position des Pendelpunkts in radialer Richtung veränderbar ist. Durch den in radialer Richtung veränderbaren Pendelpunkt kann eine an der Pendelmasse angreifende fiktive Pendellänge verändert werden, sodass die Pendelmasse mit einer veränderlichen Frequenz schwingen und dadurch unterschiedliche Frequenzen dämpfen kann. Ferner wird vorgeschlagen, den Pendelpunkt in Abhängigkeit von der Rotationsgeschwindigkeit nach radial außen zu verschieben, um so die Dämpfungseigenschaften an die momentane Rotationsgeschwindigkeit des Antriebsstrangs anzupassen.

Bei der derartigen Lösung mag zwar eine kontinuierliche Nachführung der effizient dämpfbaren Frequenzen gewährleistet werden, jedoch hat diese den Nachteil, dass vergleichsweise große Änderungen der Anregungsfrequenz bei einer bestimmten Motordrehzahl nicht berücksichtigt werden können. Insbesondere können solche Drehschwingungsdämpfungsanordnungen lediglich auf eine Tilgungsordnung ausgelegt werden, die beispielsweise bei einem Verbrennungsmotor zu einer vorgegebenen Zylinderzahl bei vorgegebenem Verbrennungstakt korrespondiert. Die Drehungleichförmigkeiten von Verbrennungskraftmaschinen werden nämlich überwiegend durch die getaktete Verbrennung herkömmlicher Hubkolbenmotoren erzeugt. Eine Abstimmung der Drehschwingungsdämpfungsanordnung auf beispielsweise die Grundfrequenz der Drehungleichförmigkeit in einem ersten Drehzahlbereich des Motors und auf beispielsweise die erste harmonische Anregung der Grundfrequenz in einem zweiten Drehzahlbereich ist mit dem im Stand der Technik bekannten Drehschwingungsdämpfern nicht möglich.

Es besteht daher das Bedürfnis, die Flexibilität hinsichtlich der Drehzahladaptivität bzw. der drehzahlabhängigen Auslegung von Drehschwingungsdämpfungsanordnungen zu verbessern.

Ausführungsbeispiele der vorliegenden Erfindung ermöglichen dies, indem eine Drehschwingungsdämpfungsanordnung bereitgestellt wird, die eine um eine Drehachse drehbare Trägeranordnung, eine zu der Trägeranordnung in einer Umfangsrichtung relativ bewegliche Auslenkungsmasse sowie zumindest ein sich radial erstreckendes, elastisch deformierbares Rückstellelement aufweist, mittels dessen die Trägeranordnung und die Auslenkungsmasse relativ zueinander verdrehbar gekoppelt sind. Ein dem Rückstellelement zugeordnetes Abstützelement ist radial relativ zu dem Rückstellelement beweglich, wobei mittels des Abstützelements an einer radialen Position des Abstützelements das Rückstellelement in der Umfangsrichtung bezüglich der Trägeranordnung abgestützt wird. Die Flexibilität der Abstimmung kann insbesondere dadurch erhöht werden, dass eine Steifigkeit der von dem Rückstellelement in der Umfangsrichtung bewirkten Kopplung zwischen der Trägeranordnung und der Auslenkungsmasse an zumindest einer radialen Position des Abstützelements eine sprunghafte Änderung erfährt bzw. einen unstetigen Verlauf hat. Eine sprunghafte Änderung ermöglicht es beispielsweise, bei einer vorbestimmten radialen Position der Abstützelemente, die gesamte Steifigkeit der Drehschwingungsdämpfungsanordnung, bzw. die Steifigkeit der Verbindung zwischen der Trägeranordnung und den Auslenkungsmassen der Drehschwingungsdämpfungsanordnung derart zu ändern, dass dieser auf eine andere Ordnung der Drehungleichförmigkeit innerhalb des Antriebsstrangs bzw. eine andere Schwingungsordnung eines antreibenden Verbrennungsmotors abgestimmt ist.

Als sprunghafte Änderung soll hierin allgemein eine solche Änderung verstanden werden, bei der sich im Bereich der sprunghaften Änderung die Steifigkeit der Kopplung bei einer Veränderung der radialen Position des Abstützelementes um ein vorbestimmtes Wegelement deutlich mehr ändert als in den angrenzenden Bereichen bei identischer Veränderung der radialen Position des Abstützelementes. Dies bedeutet gemäß einigen Ausführungsbeispielen der Erfindung beispielsweise, dass sich die Steifigkeit der Kopplung während der sprunghaften Änderung um mindestens 20 %, um mindestens 45% oder sogar um 90 % ändert. Dabei erfolgt diese Änderung innerhalb eines vorbestimmten Wegelements das im Vergleich zu der gesamten Länge der möglichen radialen Positionen des Abstützelements äußerst gering bzw. vernachlässigbar ist. Als in diesem Sinne vernachlässigbar kann beispielsweise ein Bereich angesehen werden, der weniger als 5% oder 2 % der gesamten radialen Beweglichkeit des Abstützelements ausmacht.

Beispielsweise kann durch eine sprunghafte Erhöhung der Steifigkeit der Drehschwingungsdämpfungsanordnung, also der Steifigkeit der durch die Rückstellelemente vermittelten Kopplung zwischen der Trägeranordnung und der/den Auslenkungsmasse/n eine Abstimmung auf die doppelte Schwingungsordnung erreicht werden. D.h., durch einen entsprechend unstetigen bzw. Sprunghaften Verlauf der Steifigkeit der Kopplung an einer zu einer vorgegebenen Drehzahl korrespondierenden radialen Position des Abstützelements kann beispielsweise ab dieser Drehzahl die erste Oberschwingung der von einem Verbrennungsmotor angeregten Grundschwingung einer Drehungleichförmigkeit gedämpft werden. Je nach den übrigen Komponenten des Antriebsstrangs bzw. der Anordnung der Drehschwingungsdämpfungsanordnung innerhalb des Antriebsstrangs kann dies die dominante, eine Störung im Antriebsstrang verursachende Mode werden.

Alternativ dazu kann beispielweise auch durch eine Halbierung der Steifigkeit der Drehschwingungsdämpfungsanordnung eine Senkung der Ordnung, insbesondere eine Reduktion der Abstimmfrequenz um $1/\sqrt{2}$ erreicht werden. Demgemäß kann durch eine Verdopplung der Steifigkeit der Drehschwingungsdämpfungsanordnung eine Erhöhung der Ordnung um den Faktor $\sqrt{2}$ erzielt werden. Allgemein gesprochen kann mit den hinsichtlich der Abstimmung der Schwingungsdämpfung flexibleren Drehschwingungsdämpfungsanordnungen gemäß den Ausführungsbeispielen der vorliegenden Erfindung prinzipiell ein nahezu beliebiger Faktor für die Änderung der Tilgersteifigkeit bzw. der Steifigkeit der Drehschwingungsdämpfungsanordnung bei einer radialen Position des Abstützelements, also bei einer dazu korrespondierenden Drehzahl, gewählt werden. Die zur Abstimmung der Drehschwingungsdämpfungsanordnung auf eine andere Ordnung bzw. Frequenz erforderliche Änderung A der Steifigkeit ergibt sich aus der folgenden Beziehung: A = (Zielordnung/vorhandene Ordnung)². Allgemein können Ausführungsbeispiele erfindungsgemäßer Drehschwingungsdämpfungsanordnungen daher nicht lediglich auf eine einzige Tilgungsordnung abgestimmt sein, wie dies bislang der Fall war. Vielmehr können diese drehzahlabhängig auf verschiedene Tilgungsordnungen abgestimmt werden. Gemäß einigen Ausführungsbeispielen kann dies durch den unstetigen bzw. sprunghaften Verlauf der Steifigkeit der von den einzelnen Rückstellelementen in der Umfangsrichtung oder entgegen der Umfangsrichtung bewirkten Kopplungen erreicht werden.

Bei weiteren Ausführungsbeispielen kann dies erreicht werden, indem an der radialen Position des Abstützelements die Abstützung des Rückstellelements bezüglich der Trägeranordnung aufgehoben wird. D.h. eine radial innen vorhanden Abstützung wird nach radial außen aufgehoben oder eine bislang radial innen nicht existente Abstützung wird ab der radialen Position ermöglicht. Dann kann die gewünschte Gesamtabstimmung durch geeignete Kombination mit den weiteren Rückstellelementen der Drehschwingungsdämpfungsanordnung erzielt werden. Sofern in einem an die radiale Position des Abstützelements angrenzenden Bereich die Kopplung in der Umfangsrichtung vollständig aufgehoben wird, kann beispielsweise durch Kombination mit weiteren Rückstellelementen, deren Kopplung an derselben radialen Position entgegen der Umfangsrichtung aufgehoben wird, insgesamt eine Verringerung der Steifigkeit der Drehschwingungsdämpfungsanordnung erzielt werden. Wird also beispielsweise bei einem ersten Rückstellelement eines ersten Schalttyps an der radialen Position des diesem zugeordneten Abstützelements die Kopplung über das Rückstellelement in der Umfangsrichtung und bei einem zweiten Rückstellelement eines zweiten Schalttyps an derselben radialen Position die Kopplung des Rückstellelements entgegen der Umfangsrichtung aufgehoben, ergibt sich netto der Effekt, dass ein Rückstellelement bzw. eine Tilgerfeder wirkungsmäßig vollständig entfernt wird. Je nach der Anzahl der übrigen im System vorhandenen Rückstellelemente bzw. Biegefedern verringert sich dadurch die Steifigkeit der Drehschwingungsdämpferanordnung um einen vorhersagbaren Betrag.

Gemäß einigen Ausführungsbeispielen wird innerhalb eines radial innenliegenden ersten Bereiches von radialen Position des Abstützelements eine Steifigkeit der Kopplung geringer gewählt als in einem daran angrenzenden radial weiter außen liegenden zweiten Bereich von Positionen des Abstützelements, wobei an der vorbestimmten Position des Abstützelements, d.h. beim Übergang von dem radial innen liegenden ersten Bereich von Positionen zum radial weiter außen liegenden zweiten Bereich von Positionen die Steifigkeit der Kopplung sprunghaft ansteigt, um die Drehschwingungsdämpfungsanordnung beispielsweise auf eine höhere Ordnung einer anregenden Frequenz abzustimmen.

Gemäß weiteren Ausführungsbeispielen kann die Kennlinie der Steifigkeit dahingehend angepasst werden, dass innerhalb eines an den zweiten Bereich angrenzenden radial außerhalb des zweiten Bereichs liegenden dritten Bereichs von Positionen des Abstützelements die Steifigkeit wieder geringer wird, wobei bei einem Übergang von dem zweiten zu dem dritten Bereich die Steifigkeit sprunghaft abfallen kann. Ein sprunghafter Abfall der Steifigkeit kann beispielsweise vorteilhaft dazu genutzt werden, die Drehschwingungsdämpfungsanordnung auf unterschiedliche Ordnungen eines Verbrennungsmotors bei unterschiedlichen Betriebszuständen, beispielsweise mit einer unterschiedlichen Anzahl von aktiven Zylindern, abzustimmen, sodass die Schwingungsdämpfungswirkung in allen Betriebszuständen optimal ist.

Beispielsweise kann gemäß einigen Ausführungsbeispielen die Drehschwingungsdämpfungsanordnung so abgestimmt werden, dass diese bei niedrigeren Drehzahlen auf die zweite Ordnung eines Vier-Zylinder-Motors abgestimmt ist, also auf die Hauptanregungs- bzw. Grundfrequenz der von dem Verbrennungszyklus des Vier-Zylinder-Motors hervorgerufenen Drehungleichförmigkeiten. Werden bei höheren Drehzahlen zwei Zylinder des Motors abgeschaltet, um diese wiederum in einem optimalen energieeffizienten Betriebsbereich betreiben zu können, kann durch die gezielte Deaktivierung von Rückstellelementen die Federsteifigkeit auf ein Viertel gesenkt werden und somit im Zwei-Zylinder-Betrieb eine Abstimmung auf die erste Ordnung erreicht werden. Beim Zwei-Zylinder-Betrieb stellt die erste Ordnung ebenfalls die Hauptanregende dar, wobei durch Ausführungsbeispiele erfindungsgemäßer Drehschwingungsdämpfungsanordnungen die Flexibilität bei der Auslegung der Drehzahlabhängigkeit so groß ist, dass selbst die von unterschiedlichen aktiven Zylinderzahlen erzeugten Drehungleichförmigkeiten während des Betriebs ein- und desselben Verbrennungsmotors durch dieselbe Drehschwingungsdämpfungsanordnung optimal gedämpft werden können. Dies kann besonders von Vorteil sein, wenn die Zylinderabschaltung drehzahlabhängig vorgenommen wird, wobei auch beliebige andere Szenarien der Zylinderabschaltungen möglich sind, beispielsweise die Abschaltung von 8 auf 4 oder von 6 auf 3 Zylinder. Selbstverständlich sind auch ungeradzahlige Verhältnisse möglich, beispielsweise 8 auf 6 oder 6 auf 4 Zylinder.

Gemäß einigen Ausführungsbeispielen der vorliegenden Erfindung weist das Abstützelement einen ersten Umfangsabstützbereich zum Abstützen des Rückstellelements in der Umfangsrichtung und einen zweiten Umfangsabstützbereich zum Abstützen des Rückstellelements entgegen der Umfangsrichtung auf, wobei der erste Umfangsabstützbereich in dem ersten Bereich von Positionen des Abstützelements aus einer die Abstützung des Rückstellelements bewirkenden aktiven Position in der Umfangsrichtung in eine inaktive Position abgeklappt bzw. überführt ist. D.h., das Widerlager für das Rückstellelement wird in dem ersten Bereich von Radialpositionen des Abstützelements so weit von dem Rückstellelement bzw. der Biegefeder entfernt, dass dieses nicht mehr als Widerlager dienen kann. Dadurch wird die durch das Rückstellelement in der Umfangsrichtung vermittelte elastische Kopplung zwischen der Trägeranordnung und der Auslenkungsmasse unterbrochen bzw. aufgehoben. D.h., das Rückstellelement mit dem ihm zugeordneten Abstützelement wirkt lediglich noch entgegen der Umfangsrichtung. Bei alternativen Ausführungsbeispielen kann ein Rückstellelement von vorneherein nur in der Umfangsrichtung wirken, sodass nach Abklappen bzw. Entfernen des Umfangabstützbereiches das Rückstellelement vollständig, d.h. in beiden Richtungen aus der Kopplung zwischen Trägerelement und Auslenkungsmasse genommen ist.

Um ein solches Abklappen eines Teils des Abstützelements zu ermöglichen, ist gemäß einigen Ausführungsbeispielen eine Führung in der Trägeranordnung, in der sich das Abstützelement radial bewegen kann, in dem ersten Bereich von Positionen des Abstützelementes in der Umfangsrichtung aufgeweitet. In den derart aufgeweiteten Bereich kann derjenige Teil des Abstützelements, der den Umfangsabstützbereich enthält, abgeklappt werden. Um eine zuverlässige Schaltcharakteristik eines solchen Abstützelements bzw. eines solchen schaltbaren Gleitsteins zu ermöglichen, ist gemäß einigen Ausführungsbeispielen ein den ersten Umfangsabstützbereich umfassender Gelenkteil des Abstützelements bezüglich einem den zweiten Umstandsabstützbereich umfassenden festen Teil des Abstützelements schwenkbar und mit einer in der Umfangsrichtung wirkenden relativen Kraft bezüglich dem festen Teil beaufschlagt. Diese kann beispielsweise durch eine Biegefeder hervorgerufen sein.

Gemäß einigen weiteren Ausführungsbeispielen wird der sprunghafte Verlauf der Steifigkeit der Kopplung durch die Form des Rückstellelements selbst bewirkt. Dafür kann beispielsweise eine Ausdehnung des Rückstellelements in der Umfangsrichtung innerhalb des ersten Bereichs von Position des Abstützelements geringer sein als innerhalb des zweiten Bereichs von Positionen. Dadurch kann bewirkt werden, dass das Rückstellelement aufgrund dessen verringerter Dicke bzw. Materialstärke im ersten Bereich von Positionen dort nicht in Anlage zu einem Umfangsabstützbereich des Abstützelementes gelangen kann, sodass in der Umfangsrichtung solange keine elastische Kopplung der Trägeranordnung und der Auslenkungsmasse über das Rückstellelement erfolgt, bis sich das Abstützelement in der radialen Richtung bis in den zweiten Bereich bewegt hat, in dem die Materialstärke des Rückstellelementes groß genug ist, um das Abstützelement zur Abstützung an der Trägeranordnung benutzen zu können.

Eine mehrstufige Schaltcharakteristik kann auch mit solchen Ausführungsbeispielen beispielsweise dadurch erreicht werden, dass innerhalb eines dritten Bereichs von Positionen des Abstützelements, welcher radial außerhalb des zweiten Bereiches von Positionen liegt, die Ausdehnung des Rückstellelements in der Umfangsrichtung wieder geringer ist als in dem zweiten Bereich.

Um durch die unterschiedliche Ausdehnung des Rückstellelements in der Umfangsrichtung keine unterschiedliche Biegecharakteristik bzw. Steifigkeitsvariationen zu erhalten, ist gemäß einigen Ausführungsbeispielen der Erfindung die Ausdehnung bzw. die Materialstärke des Rückstellelementes in denjenigen Bereichen, in denen eine Ausdehnung entlang der Umfangsrichtung verringert ist, in einer auf der Umfangsrichtung senkrecht stehenden axialen Richtung derart erhöht, dass ein die Elastizität bedingendes Flächenträgheitsmoment des Rückstellelements in allen Bereichen näherungsweise identisch ist. Mit anderen Worten ist bei einigen Ausführungsbeispielen innerhalb des ersten und/oder innerhalb des dritten Bereiches eine axiale Ausdehnung des Rückstellelementes gegenüber derjenigen im zweiten Bereich derart erhöht, dass ein Flächenträgheitsmoment des Rückstellelements im zweiten Bereich demjenigen im ersten und/oder dritten Bereich entspricht.

Gemäß einigen Ausführungsbeispielen der Erfindung ist ein Querschnitt des Rückstellelements entlang der radialen Ausdehnung desselben näherungsweise konstant, wobei innerhalb des zweiten Bereichs von Positionen auf der der Umfangsrichtung zugewandten Seite des Rückstellelements ein Blech angeordnet ist, welches derart dimensioniert ist, dass im zweiten Bereich das Rückstellelement über das Blech an der radialen Position des Abstützelements in der Umfangrichtung bezüglich der Trägeranordnung abgestützt wird. D.h., der Kraftschluss zwischen dem Rückstellelement und dem Abstützelement wird in der Umfangsrichtung über ein Blech hergestellt, das durch einen Dickensprung bzw. eine Dickenvariation den unstetigen bzw. sprunghaften Verlauf der Steifigkeit hervorruft. Da das Blech lediglich dem Kraftschluss dient und keine zusätzliche Biegesteifigkeit in das System einbringt, kann gemäß diesen Ausführungsbeispielen die Form der Tilgerfedern bzw. der Rückstellelemente entlang deren gesamter radialer Ausdehnung konstant bleiben.

Gemäß einigen weiteren Ausführungsbeispielen erstreckt sich das Blech radial bis an das innere Ende des Rückstellelementes und ist dort in Form eines Klipses umgeschlagen, sodass dieses auf einfach Art und Weise während des Produktionsprozesses an dem Rückstellelement angebracht werden kann. Beides ermöglicht eine wirtschaftliche Herstellung von Ausführungsbeispielen erfindungsgemäßer Drehschwingungsdämpfungsanordnungen sowie die Auslegung unterschiedlichster Drehschwingungsdämpfungsanordnungen in Form eines Baukastensystems, da die Feder- und die Schalteigenschaften unabhängig voneinander zu einer großen Vielzahl von Kennlinien kombiniert werden können. D.h. die Abstimmung der Drehschwingungsdämpfungsanordnung kann drehzahlabhängig hinsichtlich der zu tilgenden Frequenz oder der zu tilgenden Schwingungsordnung in Form eines Baukastens nahezu beliebig verändert werden. Als Tilgungsordnung ist diesbezüglich die Anzahl der pro Umdrehung des Systems auftretenden Anregungen für Drehungleichförmigkeiten zu verstehen. Bei einem Vier-Zylinder Vier-Takt Ottomotor erfolgen pro Kurbelwellenumdrehung zwei Zündvorgänge des Krafstoffgemisches, die wiederum Drehungleichförmigkeiten anregen. Diese Grundfrequenz der Anregung, entspricht somit einer Anregung zweiter Ordnung in der eingeführten Terminologie. Allgemein gesprochen kann im Sinne eines Baukastens ein den Kraftschluss zwischen dem Rückstellelement und dem Abstützelement vermittelndes Blech an einem radial inneren Ende des Rückstellelements kraft-, form- oder stoffschlüssig befestigt werden, um einzelne Teile im Sinne eines Baukastensystems zu kombinieren.

Formschlüssig bedeutet in diesem Zusammenhang, dass eine Verbindung, die eine Relativbewegung der miteinander verbundenen Komponenten in zumindest einer Verbindungsrichtung verhindert, dadurch bewirkt wird, dass die Geometrie der zur Verbindung verwendeten Komponenten derart gewählt wird, dass diese sich in einer Richtung senkrecht zur Verbindungsrichtung überschneiden, um derart die Bewegung in der Verbindungsrichtung zu verhindern. Kraftschlüssig bedeutet in diesem Zusammenhang, dass eine Verbindung, die eine Relativbewegung der miteinander verbundenen Komponenten in zumindest einer Richtung verhindert, durch eine zwischen den Komponenten senkrecht zur Verbindungsrichtung wirkende Kraft, die beispielsweise zu erhöhten Kohäsions- oder Adhäsionskräften führt, bewirkt wird. Ein Kraftschluss liegt insbesondere so lange vor, wie eine durch die Haftreibung bewirkte Kraft zwischen den Komponenten nicht überschritten wird. Stoffschlüssig bedeutet in diesem Zusammenhang, dass eine Verbindung, die eine Relativbewegung der miteinander verbundenen Komponenten in zumindest einer Richtung verhindert, über atomare oder molekulare Kräfte vermittelt wird. Dabei kann zumindest teilweise eine Vermischung der Materialen der verbundenen Komponenten an einer Grenzfläche erfolgen. Diese muss nicht ausschließlich zwischen den Materialen der verbundenen Komponenten allein erfolgen. Vielmehr kann zusätzlich eine die Vermischung bewirkende oder unterstützende Materialkomponente, beispielsweise in Form eines Klebstoffes oder eines Materials eines Schweißdrahtes vorhanden sein, sodass an der Grenzfläche eine Mehrzahl von Materialen im mikroskopischen Maßstab miteinander vermischt sind.

Gemäß einigen weiteren Ausführungsbeispielen wird an einer vorbestimmten radialen Position des Abstützelements ein sprunghafter Anstieg der Steifigkeit der Drehschwingungsdämpfungsanordnung dadurch erzielt, dass eine oder mehrere Rückstellelemente ein erstes und ein zweites Teilelement umfassen, die drehfest mit der radial außen liegenden Auslenkungsmasse gekoppelt sind, wobei sich nur das erste Teilelement radial nach innen durch den ersten Bereich von Positionen hindurch erstreckt, und wobei sich das zweite Teilelement radial nach innen nur bis zu einer Grenze zwischen dem ersten und dem zweiten Bereich erstreckt. D.h., die vorbestimmte Position des Abstützelementes korrespondiert zu derjenigen Position, bis zu der sich das zweite Teilelement nach radial innen erstreckt, sodass, sobald auch das zweite Teilelement einen Kraftschluss mit dem Abstützelement herstellt, die Steifigkeit der Drehschwingungsdämpfungsanordnungen sprunghaft ansteigt, was zu den oben angeführten Vorteilen führen kann.

Gemäß einigen weiteren Ausführungsbeispielen ist innerhalb eines radial innen liegenden ersten Bereichs von Positionen des Abstützelements eine Steifigkeit der Kopplung höher als in einem daran angrenzenden radial weiter außen liegenden zweiten Bereich von Positionen, wobei die Steifigkeit der Kopplung beim Übergang von dem ersten zu dem zweiten Bereich sprunghaft abfällt. Ein drehzahlabhängiger sprunghafter Abfall der Steifigkeit der Drehschwingungsdämpfungsanordnung kann, wie oben dargelegt, beispielsweise bei Motoren mit drehzahlabhängiger Zylinderabschaltung von besonderem Vorteil sein und den dort stark variierenden Anregungsfrequenzen bei jeweils optimaler Dämpfung der Drehungleichförmigkeiten Rechnung tragen.

Gemäß weiteren Ausführungsbeispielen kann eine dreistufige Charakteristik einer Drehschwingungsdämpfungsanordnung auch für diese Ausführungsbeispiele dadurch erzielt werden, dass innerhalb eines an den zweiten Bereich angrenzenden und radial außerhalb des zweiten Bereichs liegenden dritten Bereichs von Positionen des Abstützelements die Steifigkeit der Kopplung höher ist als in dem zweiten Bereich, und von dem zweiten Bereich aus sprunghaft ansteigt. Eine solche Form der Kennlinie kann beispielsweise dazu dienen, in einer Konfiguration mit Zylinderabschaltung, in der zunächst bei niedrigen Drehzahlen, beispielsweise also beim Anfahren, alle Zylinder aktiv sind, woraufhin in einem Teillastbetrieb mehrere Zylinder abgeschalten sind und bei der bei geforderter Volllast wieder sämtliche Zylinder aktiv sind, in jedem der drei möglichen Betriebszustände eine optimale Schwingungsdämpfung bzw. -tilgung dazu erreichen.

Gemäß einigen Ausführungsbeispielen kann auch hier die unterschiedliche Steifigkeit durch entlang der radialen Ausdehnung variierende Dicken bzw. Ausdehnungen des Abstandselements in Umfangsrichtung erzielt werden.

Um eine kontrollierte und an den Antriebsstrang angepasste drehzahlabhängige radiale Beweglichkeit des Abstützelements zu erzielen, ist gemäß einigen Ausführungsbeispielen der Erfindung das Abstützelement entgegen der radialen Richtung mit einer Vorspannkraft beaufschlagt und in der radialen Richtung unter dem Einfluss einer rotationsbedingten Fliehkraft nach außen beweglich. Die Kraftkennlinie der Vorspannkraft, die beispielsweise mittels einer Schraubendruckfeder oder dergleichen ausgeübt werden kann, bedingt somit eine zu der momentanen Drehzahl korrespondierende radiale Position des Abstützelements und dadurch ebenfalls einen momentanen Schaltzustand des Abstützelements bzw. die momentane Steifigkeit der von dem Rückstellelement bewirkten Kopplung zwischen der Trägeranordnung und der Auslenkungsmasse, welche an zumindest einer Stelle einen unstetigen bzw. sprunghaften Verlauf aufweist.

Gemäß einigen Ausführungsbeispielen umfasst eine Drehschwingungsdämpfungsanordnung sowohl Rückstellelemente eines ersten Schalttyps als auch Rückstellelemente eines zweiten Schalttyps, die sich dadurch unterscheiden, dass die Rückstellelemente des ersten Schalttyps zwischen der Trägeranordnung und der Auslenkungsmasse eine Kopplung in der Umfangsrichtung bewirken, die an zumindest einer radialen Position des Abstützelements einen sprunghaften Verlauf hat, wohingegen dies bei den Rückstellelementen des zweiten Schalttyps entgegen der Umfangsrichtung der Fall ist, sodass der Sprung in der Steifigkeit in unterschiedliche Richtungen wirkt. Dabei ist gemäß einigen Ausführungsbeispielen der Erfindung ein Rückstellelement eines ersten Schalttyps jeweils zusammen mit einem Rückstellelement des zweiten Schalttyps innerhalb der Drehschwingungsdämpfungsanordnung angeordnet, sodass sich die Kopplungen der beiden derart ergänzen, dass bei Erreichen der vorbestimmten radialen Position der beiden Abstützelemente der Rückstellelemente der Effekt erzielt wird, als würde eines der Rückstellelemente vollständig aus der Kopplung genommen.

Bezugnehmend auf die beigefügten Figuren werden nachfolgend einige Ausführungsbeispiele der Erfindung näher erläutert. Es zeigen:

Fig. 1a-e     ein Beispiel für eine Drehschwingungsdämpfungsanordnung;

Fig. 2     eine Ansicht auf ein Ausführungsbeispiel einer Drehschwingungsdämpfungsanordnung mit schaltbarem Abstützelement;

Fig. 3a,b     einen Schnitt durch ein Ausführungsbeispiel eines schaltbaren Abstützelements;

Fig. 4a,b     einen Schnitt durch ein weiteres Ausführungsbeispiel eines schaltbaren Abstützelements;

Fig. 5     eine Ausschnittsvergrößerung einer Ansicht auf ein weiteres Ausführungsbeispiel einer Drehschwingungsdämpfungsanordnung;

Fig. 6     eine Ansicht auf ein weiteres Ausführungsbeispiel einer Drehschwingungsdämpfungsanordnung;

Fig. 7      eine Ausschnittsvergrößerung des Ausführungsbeispiels der Fig. 6;

Fig. 8      eine weitere Ausschnittsvergrößerung des Ausführungsbeispiels der Fig. 6;

Fig. 9      eine weitere Ausschnittsvergrößerung des Ausführungsbeispiels der Fig. 6;

Fig. 10     ein Beispiel für eine mit einem Ausführungsbeispiel einer Drehschwingungsdämpfungsanordnung erzielbaren Charakteristik einer Kopplungssteifigkeit zwischen einer Trägeranordnung und einer Auslenkungsmasse der Drehschwingungsdämpfungsanordnung;

Fig. 11     eine vergrößerte Darstellung eines Rückstellelements eines Ausführungsbeispiels einer Drehschwingungsdämpfungsanordnung;

Fig. 12     ein Beispiel für eine mit einem Ausführungsbeispiel einer Drehschwingungsdämpfungsanordnung erzielbaren Charakteristik einer Kopplungssteifigkeit zwischen einer Trägeranordnung und einer Auslenkungsmasse der Drehschwingungsdämpfungsanordnung;

Fig. 13     einen Schnitt durch ein weiteres Ausführungsbeispiel einer Drehschwingungsdämpfungsanordnung; und

Fig. 14     ein Beispiel für die Einbausituation einer Drehschwingungsdämpfungsanordnung gemäße einem Ausführungsbeispiel der vorliegenden Erfindung in einem Antriebsstrang eines Fahrzeugs.

Beispielhafte Ausführungsbeispiele werden nun in Bezugnahme auf die beigefügten Figuren beschrieben. Dabei wird vorab darauf hingewiesen, dass die Figuren nicht notwendigerweise maßstabsgetreu gezeichnet sind und dass, um gewisse Merkmale oder Eigenschaften hervorzuheben, bestimmte Komponenten durch Verwendung einer anderen Strichstärke oder Schraffur künstlich hervorgehoben sein können.

Es wird explizit darauf hingewiesen, dass weitere Ausführungsbeispiele durch die in den nachfolgenden Figuren gezeigten speziellen Implementierungen nicht eingeschränkt werden sollen. Insbesondere soll die Tatsache, dass bestimmte Funktionalitäten in den folgenden Figuren bezüglich spezieller Entitäten, spezifischer Funktionsblöcke oder spezifischer Vorrichtungen beschrieben werden, nicht so ausgelegt werden, dass diese Funktionalitäten in weiteren Ausführungsbeispielen auf dieselbe Art und Weise verteilt sein sollen oder gar müssen. In weiteren Ausführungsbeispielen mögen bestimmte, nachfolgend getrennten Bauteilen oder Einheiten zugeordnete Funktionalitäten in einem einzigen Bauteil bzw. in einem einzigen funktionalen Element zusammengefasst sein oder hierin als in einem einzigen Element vereinte Funktionalitäten können in getrennten funktionalen Einheiten oder durch mehrere separate Bauteile ausgeführt werden.

Ferner wird darauf hingewiesen, dass, wenn ein spezielles Element oder Bauteil als mit einem anderen Element verbunden, mit diesem gekoppelt oder an dieses angebunden bezeichnet wird, damit nicht notwendigerweise gemeint ist, dass dieses unmittelbar und direkt mit dem anderen Bauteil verbunden, gekoppelt oder an dieses angebunden sein soll. Sofern dies gemeint ist, wird darauf explizit hingewiesen, indem beschrieben ist, dass das Element mit dem weiteren Element direkt verbunden, direkt gekoppelt oder direkt an dieses angebunden ist. Dies bedeutet, dass keine dazwischenliegenden, eine indirekte Kopplung bzw. Verbindung oder Anbindung vermittelnde weiteren Elemente vorhanden sind. Darüber hinaus bezeichnen in den nachfolgenden Figuren identische Bezugszeichen identische, funktionsidentische oder funktionsähnliche Komponenten, die also zwischen den unterschiedlichen nachfolgend beschriebenen exemplarischen Ausführungsbeispielen einander substituierend ausgetauscht werden können. Daher kann auch zur detaillierten Beschreibung eines solchen Bauteils, das in einer Figur dargestellt ist, auf die Beschreibung des dazu korrespondierenden Bauteils bzw. Bauelements in einer anderen Figur zurückgegriffen werden.

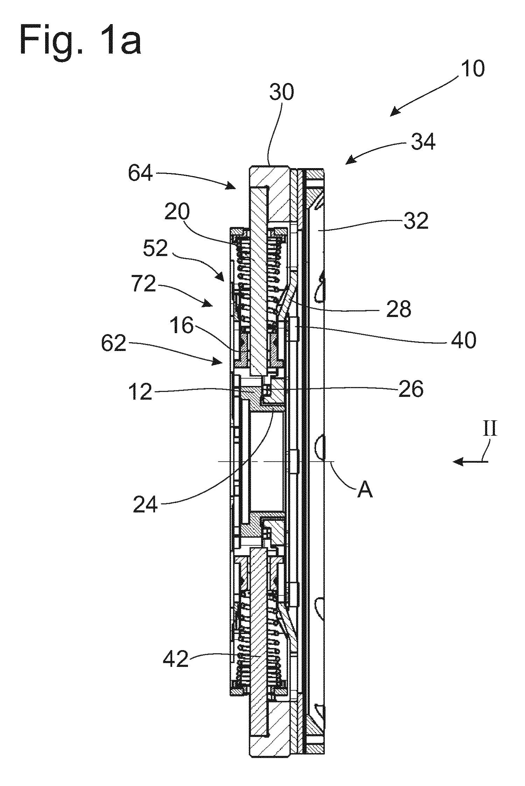

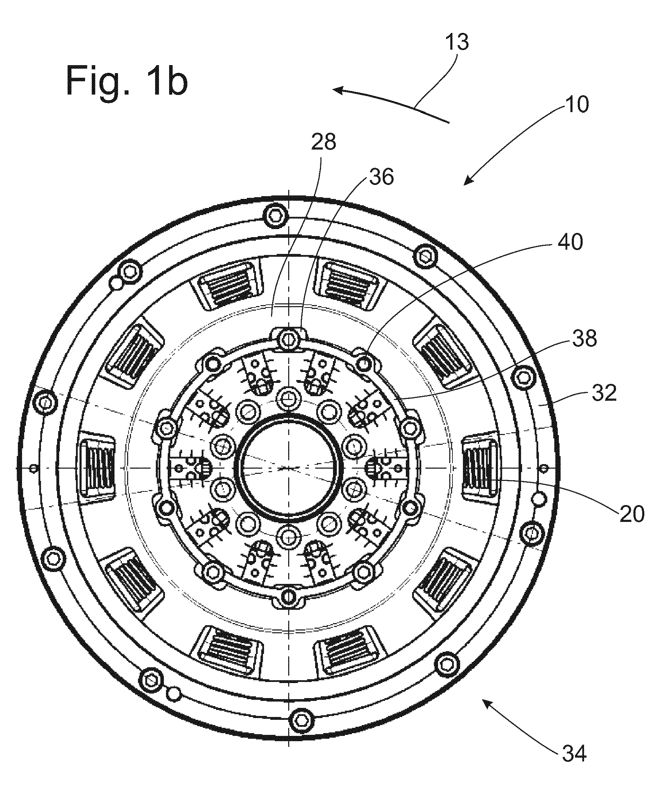

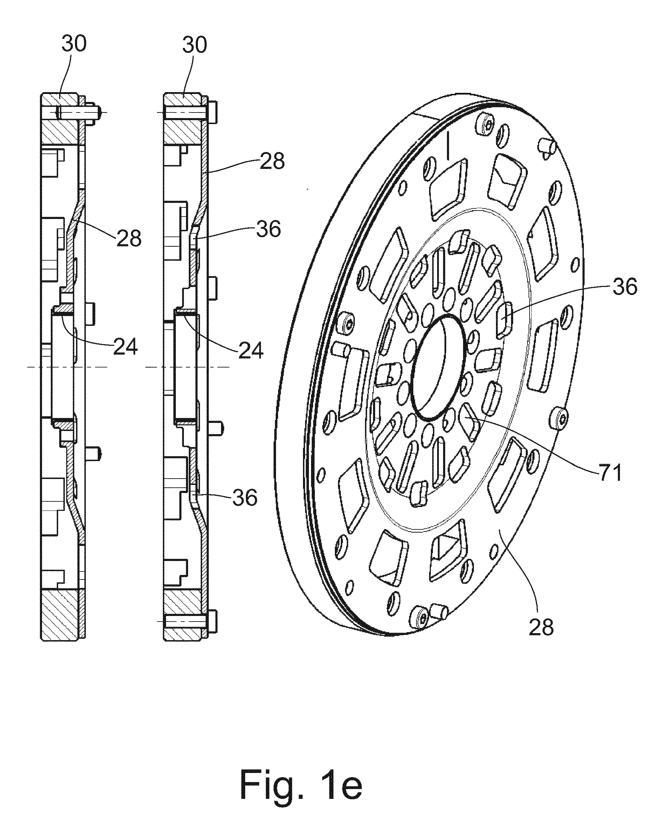

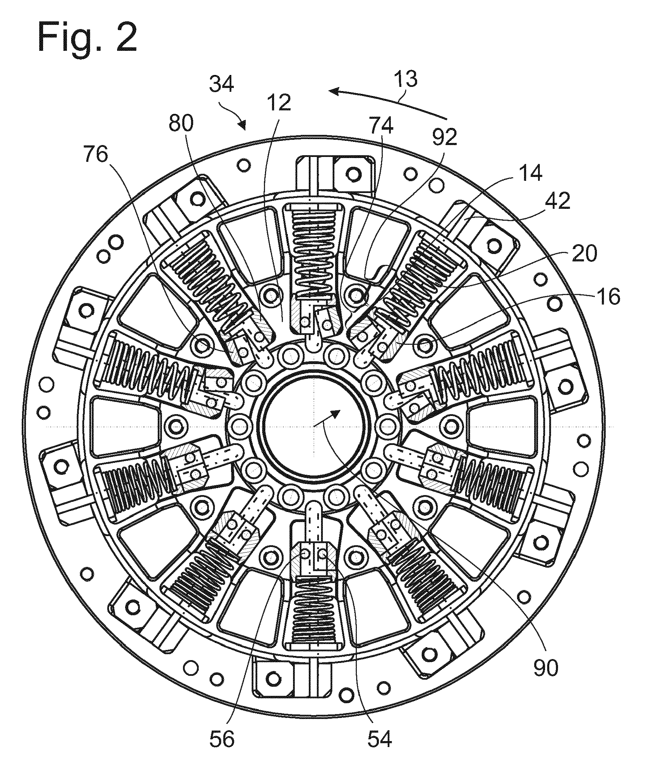

Bevor nachfolgend anhand der Figuren 2 bis 13 Ausführungsbeispiele der vorliegenden Erfindung dargestellt werden, wird anhand der Figuren 1a bis 1e zunächst zum besseren Verständnis des Kontexts der Erfindung ein Beispiel einer herkömmlichen Drehschwingungsdämpfungsanordnung beschrieben.

Die Fig. 1a bis e zeigen ein Beispiel einer allgemein mit 10 bezeichnete Drehschwingungsdämpfungsanordnung, welche zur Erfüllung der Funktionalität eines drehzahladaptiven Tilgers in einen Antriebsstrang eines Fahrzeugs integriert bzw. an diesen angekoppelt werden kann. Die Drehschwingungsdämpfungsanordnung 10 umfasst einen durch Verschraubung an einer Antriebsstrangkomponente zur gemeinsamen Drehung damit um eine Drehachse A festzulegenden Träger 12. In diesem Träger 12 sind in den Darstellungen entlang einer Umfangsrichtung 13 an mehreren Umfangspositionen vorzugsweise mit näherungsweise gleichmäßigem Umfangsabstand Führungen 14 vorgesehen, in welchen als Fliehgewichte wirksame Abstützelemente 16 radial bewegbar aufgenommen sind. Die Führungen 14 sind als im Wesentlichen radial sich erstreckende, langlochartige Aussparungen ausgebildet, welche nach radial innen hin durch eine radial innere Basislage der Abstützelemente 16 definierende Anschläge 18 begrenzt sind. Die Abstützelemente 16 sind durch als Schraubendruckfedern ausgebildete Vorspannfedern 20 nach radial innen zur Anlage an den Anschlägen 18, also in ihre und in ihrer Basislage vorgespannt gehalten. Dabei stützen die Vorspannfedern 20 sich an einem radial äußeren ringartigen Randbereich 22 des Trägers 12 ab.

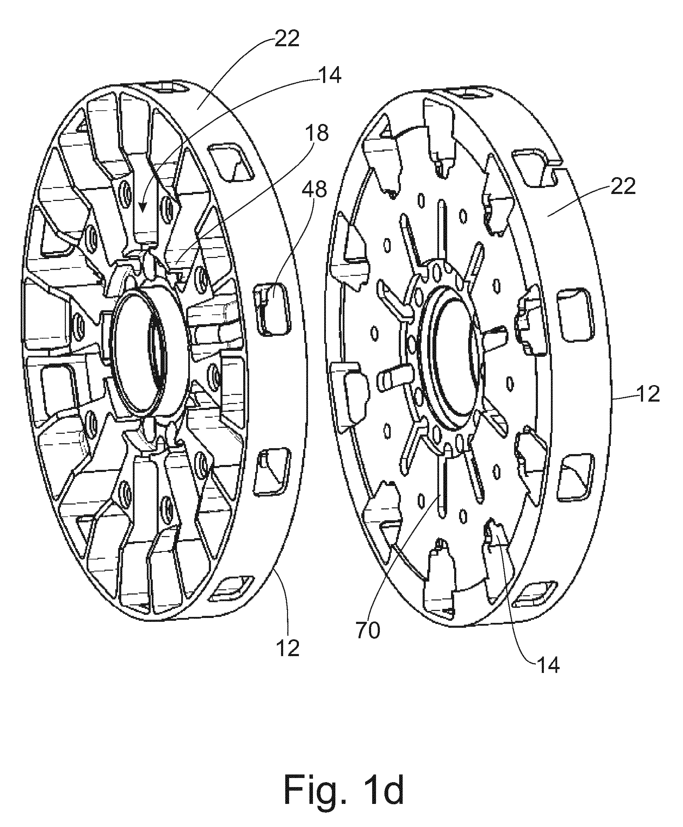

Am Träger 12 ist über ein Radiallager 24 und ein Axiallager 26 eine Trägerscheibe 28 um die Drehachse A bezüglich des Trägers 12 grundsätzlich drehbar getragen. In ihrem radial äußeren Bereich trägt die Trägerscheibe 28 beispielsweise durch Verschraubung an einer axialen Seite einen Massering 30. An der anderen axialen Seite kann beispielsweise ein weiterer Massering 32 festgelegt sein. Die Trägerscheibe 28 bildet zusammen mit dem Massering 30 und ggf. auch dem Massering 32 eine allgemein mit 34 bezeichnete Auslenkungsmasse. Durch eine Mehrzahl von in Umfangsrichtung 13 langgestreckte Aussparungen 36 durchgreifenden und einen Axialsicherungsring 38 an der vom Träger 12 abgewandten Seite der Trägerscheibe 28 haltenden Bolzen 40, beispielsweise Schraubbolzen, ist die Trägerscheibe 28 und somit die Auslenkungsmasse 34 axial am Träger 12 gesichert. Durch das Umfangsbewegungsspiel der Bolzen 40 in den Aussparungen 36 der Trägerscheibe 28 ist die Auslenkungsmasse 34 in entsprechendem Umfangsbewegungsspiel bezüglich des Trägers um die Drehachse A drehbar, so dass durch Zusammenwirkung der Bolzen 40 mit den Aussparungen 36 eine Relativdrehwinkelbegrenzung bereitgestellt ist. Ähnlich wie die Auslenkungsmasse 34 kann auch der Träger 12, anders als in Fig. 1d schematisch dargestellt, aus mehreren Einzelteilen bestehen, sodass die Bezeichnung Trägeranordnung zutreffender wäre. Daher werden im Folgenden die Begriffe Träger und Trägeranordnung synonym verwendet, wobei darunter allgemein derjenige Teil der Drehschwingungsdämpfungsanordnung verstanden werden soll, der in Umfangsrichtung relativ zu der Auslenkungsmasse 34 beweglich ist.

Die Auslenkungsmassenanordnung 34 ist mit dem Träger 12 durch eine Mehrzahl von in Umfangsrichtung 13 aufeinander folgenden, im Wesentlichen radial sich erstreckenden Rückstellelementen 42 zur Kraftübertragung gekoppelt. Diese hier beispielsweise als Blattfedern bzw. allgemein als Biegebalken ausgebildeten Rückstellelemente 42 sind in ihrem radial äußeren Bereich am Massering 30 festgelegt. Ausgehend von dieser Festlegung erstrecken sie sich nach radial innen durch Öffnungen im Randbereich des Trägers 12 hindurch in eine jeweilige Vorspannfeder 20 hinein.

Dabei erstreckt sich jedes Rückstellelement 42 mit seinem radial inneren Endbereich 50 in eine zentrale Öffnung eines zugeordneten Abstützelements 16 hinein bzw. durch dieses hindurch. Im Bereich der Öffnung 52 sind am Abstützelement 16 in seitlichem Abstand zueinander zwei beispielsweise an Stiften 54, 56 bereitgestellte Umfangsabstützbereiche 58, 60 vorgesehen, an welchen das Rückstellelement in Anlage kommt, sodass dieses an der momentanen radialen Position des Abstützelements 16 in- und entgegen der Umfangsrichtung bezüglich der Trägeranordnung bzw. dem Träger 12 abgestützt wird.

Diese Umfangsabstützbereiche 58, 60, welche in Umfangsrichtung beidseits des radial inneren Bereichs 50 des zugeordneten Rückstellelements 42 liegen, definieren in ihrer Gesamtheit einen Trägerabstützbereich, wohingegen derjenige Bereich, in welchem der radial äußere Endbereich des Rückstellelements 42 am Massering 32 bzw. allgemein an der Auslenkungsmasse 34 festgelegt ist, als Auslenkungsmassenabstützbereich bezeichnet werden kann. Das Rückstellelement 42 kann zwischen den beiden Umfangsabstützbereichen 58, 60 mit Bewegungsspiel aufgenommen sein, um eine unter Fliehkrafteinwirkung auftretende Radialbewegung des Abstützelements 16 in der zugeordneten Führung 14 im Träger 12 zu ermöglichen. Um bei dieser Radialbewegung ein Verkippen des Abstützelements 16 zu verhindern, kann dieses an seinen beiden axial orientierten Seiten Seitenführungsvorsprünge aufweisen, welche in zugeordnete, sich im Wesentlichen radial erstreckende Führungsaussparungen des Trägers 12 bzw. 71 der Trägerscheibe 28 hinein erstrecken und darin radial bewegbar geführt bzw. aufgenommen sind. Um insbesondere durch Wechselwirkung des Führungsvorsprungs 68 mit der Trägerscheibe 28 deren Relativdrehbarkeit bezüglich des Trägers 12 nicht zu beeinträchtigen, können die Aussparungen 71 an der Trägerscheibe eine größere Umfangsbreite aufweisen als die Aussparungen im Träger 12. Weiter kann ein unter Fliehkrafteinwirkung auftretendes Verkippen des Abstützelements 16 dadurch verhindert werden, dass dessen Massenschwerpunkt M näherungsweise zentral in der Öffnung 52 liegt.

Bei der vorangehend mit Bezug auf die Fig. 1a bis 1e hinsichtlich ihres konstruktiven Aufbaus erläuterten Drehschwingungsdämpfungsanordnung 10 bildet jeweils ein im Träger 12 bzw. in einer relativ zu der Auslenkungsmasse verdrehbaren Trägeranordnung radial bewegbar geführtes Abstützelement 16, das mit dieser zusammenwirkende Rückstellelement 42, die das Abstützelement 16 nach radial innen in seine Basislage vorspannende Vorspannfeder 20 und die Auslenkungsmasse 34 jeweils eine Auslenkungsmassenpendeleinheit 72. Dabei sind in der dargestellten Ausgestaltungsform insgesamt zehn derartige Auslenkungsmassenpendeleinheiten 72 vorgesehen, wobei der Träger 12 ein gemeinsamer Träger 12 für die Abstützelemente 16 aller Auslenkungsmassenpendeleinheiten 72 ist und die Auslenkungsmasse 34 eine gemeinsame Auslenkungsmasse 34 für alle Auslenkungsmassenpendeleinheiten 72 ist. Die Prinzipien der nachfolgend beschriebenen Erfindung können grundsätzlich jedoch auch realisiert sein, wenn in Zuordnung zu jeder oder zumindest einem Teil der Auslenkungsmassenpendeleinheiten 72 ein separater bzw. eigenständiger Träger vorgesehen ist oder/und wenn in Zuordnung zu allen oder einem Teil der Auslenkungsmassenpendeleinheiten 72 eine eigenständige Auslenkungsmasse vorgesehen ist. Aus Gründen der Stabilität und zum Vermeiden ungewünschter Schwingungszustände bzw. zum Erhalt eines synchronen Schwingungsverhaltens aller Auslenkungsmassenpendeleinheiten 72 kann zumindest die Zusammenfassung aller Auslenkungsmassen zu einer gemeinsamen, ringartigen Auslenkungsmasse 34 vorteilhaft sein.

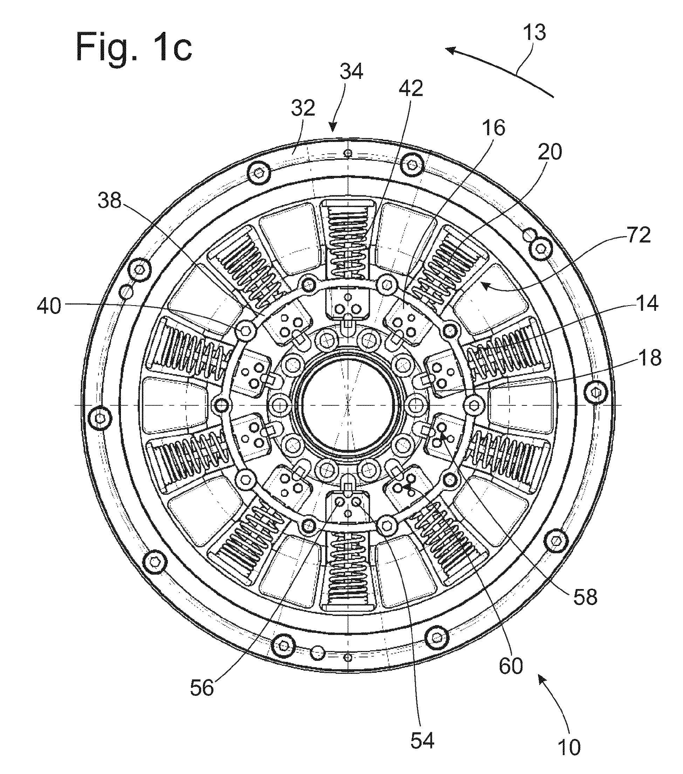

Fig. 2 zeigt ein Ausführungsbeispiel der vorliegenden Erfindung, welches sich von herkömmlichen Drehschwingungsdämpferanordnungen im Wesentlichen durch die Anbindung des Rückstellelements 42 unterscheidet, insbesondere darin, wie eine Drehzahlabhängigkeit der Steifigkeit der Drehschwingungsdämpferanordnung implementiert ist. Bis auf die bei dem in Fig. 2 gezeigten Ausführungsbeispiel durchgeführten Änderungen, insbesondere hinsichtlich der Abstützelemente 16, entspricht die Ansicht des Ausführungsbeispiels von Fig. 2 im Wesentlichen der Ansicht der Drehschwingungsdämpfungsanordnung der Fig. 1c, sodass vorliegend für funktionsähnliche oder identische Komponenten gleiche Bezugszeichen vergeben sind. Zur besseren Darstellung der Funktionalität des Ausführungsbeispiels von Fig. 2 ist, verglichen mit dem Vergleichsbeispiel von Fig. 1c, ferner der Axialsicherungsring 38 sowie ein Teil des Masserings 32 in der Darstellung weggelassen.

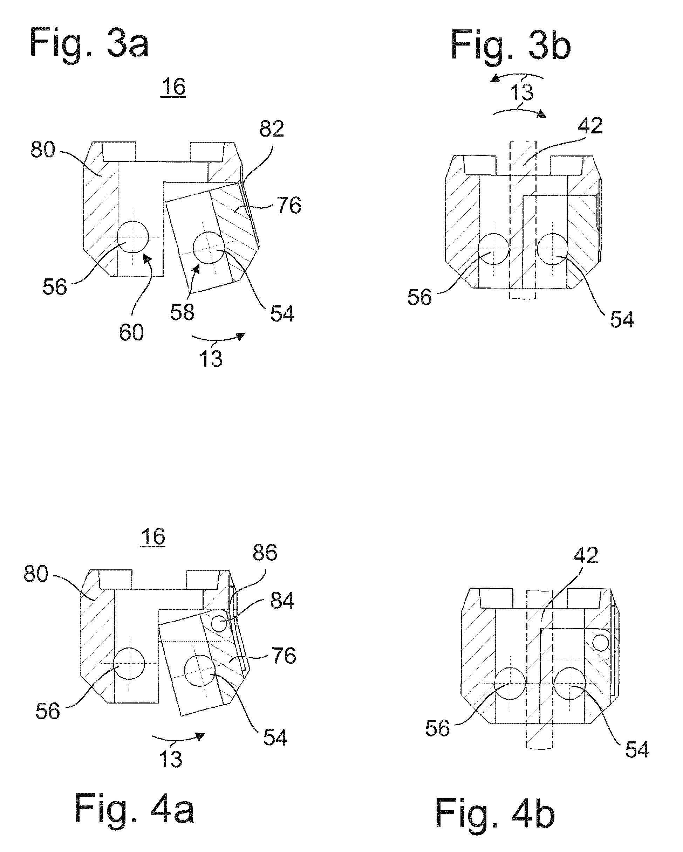

Um in einem radial innen liegenden ersten Bereich von radialen Positionen des Abstützelements 16 die Abstützung des Rückstellelements 20 bezüglich der Trägeranordnung bzw. dem Träger 12 aufzuheben, weitet sich bei dem in Fig. 2 dargestellten Ausführungsbeispiel der Querschnitt der Führung 14 in einem radial innen liegenden ersten Bereich von Positionen 74 des Abstützelements 16 in der Umfangsrichtung 13. Dadurch wird ermöglicht, dass Ausführungsbeispiele der Trägerelemente 16, die in den Fig. 3a - 4b noch detaillierter dargestellt sind, während sie sich in dem Bereich der ersten Positionen 74 befinden, den ersten Umfangsabstützbereich 58 aus einer die Abstützung des Rückstellelements 20 bewirkenden aktiven Position in der Umfangsrichtung 13 in eine inaktive Position abklappen können. Um dies zu ermöglichen, ist das Abstützelement 16 zweiteilig ausgebildet, wobei der den ersten Umfangsabstützbereich 58 umfassende Gelenkteil 76 bezüglich einem den zweiten Umfangsabstützbereich 60 umfassenden festen Teil 80 des Abstützelements schwenkbar ist. Um sicherzustellen, dass das Abstützelement 16 bzw. der Biege- oder Gelenkgleitstein 16 sich in der Aufweitung in dem ersten Bereich von Positionen 74 des Abstützelements 16 tatsächlich öffnet, ist der Gelenkteil 76 mit einer relativ zu dem festen Teil 80 in der Umfangsrichtung 13 wirkenden relativen Kraft bezüglich dem festen Teil 80 beaufschlagt. Die Fig. 3a, b und 4a, b zeigen zwei prinzipielle Möglichkeiten, eine solche Relativkraft zu bewirken. Bei dem in Fig. 3a dargestellten Abstützelement 16 wird die Kraft durch ein angewinkeltes Federblech 82 bewirkt, das an der Seite des Gelenkgleitsteins bzw. des Abstützelements 16 angebracht ist. Fig. 4a zeigt eine ähnliche konstruktive Lösung, bei der der Gelenkteil 76 bezüglich dem festen Teil 80 mittels eines Stiftes 84 drehbar gelagert ist, wobei eine zusätzliche Feder 86 die Kraft in der Umfangsrichtung 13 aufbringt.

Das heißt, in dem ersten Bereich von Positionen 74 ist eine Anbindung der Trägeranordnung 12 an die Auslenkungsmasse 34 über das Rückstellelement in der Umfangsrichtung 13 aufgehoben. Stattdessen wird das Rückstellelement 42 bzw. die Biegefeder nur bei einer Bewegung der Auslenkungsmasse 34 entgegen der Umfangsrichtung 13 elastisch deformiert.

Wird mit zunehmender Drehzahl das Abstützelement 16 in der radialen Richtung 90 entgegen der Wirkung der Schraubendruckfeder bzw. der Vorspannfeder 20 nach radial außen bewegt, ändert sich die Steifigkeit der von dem Rückstellelement 20 in der Umfangsrichtung bewirkten Kopplung zwischen der Trägeranordnung 12 und der Auslenkungsmasse 34 an einer Position zwischen dem ersten Bereich von radialen Positionen 74 und einem zweiten, zu diesem benachbarten und an diesen radial außerhalb angrenzenden zweiten Bereich von Positionen 92. Mit anderen Worten hat ein von der radialen Position des Abstützelements 16 abhängiger Verlauf der Steifigkeit an dieser Stelle einen sprunghaften bzw. unstetigen Verlauf.

Dies wird dadurch erreicht, dass sich in dem zweiten Bereich von Positionen 92 des Abstützelements 16 der Querschnitt der Führung 14 wieder verengt, sodass durch die Führung 14 der Gelenkteil 76 des Abstützelements 16 entgegen der Umfangsrichtung 13 zurückgeklappt wird und sich somit der erste Umfangsabstützbereich 58 von der inaktiven Position 58 in eine eine Abstützung des Rückstellelements 42 bewirkende aktive Position begibt, wo dieser als Widerlager für das Rückstellelement 42 dient.

Mit anderen Worten kann sich in dem zweiten Bereich von Positionen 92 das Rückstellelement 42 sowohl in als auch entgegen der Umfangsrichtung 13 über das Abstützelement 16 an dem Träger 12 abstützen, sodass in beide Richtungen eine Relativbewegung zwischen Träger 12 und Auslenkungsmasse 34 gegen die rückstellende Federwirkung des Rückstellelements 42 erfolgt.

Wohingegen in der oberen Hälfte in Fig. 2 eine Konfiguration der Schwingungsdämpfungsanordnung gezeigt ist, bei der sich die Abstützelemente 16 in ihrer radial inneren Ruhelage befinden, bei der in jeweils einer Richtung die Kopplung jedes Rückstellelements 42 aufgehoben bzw. abgeschalten ist, zeigt die untere Hälfte eine Situation, wie sie sich bei einer erhöhten Drehzahl einstellt, bei der die Abstützelemente 16 radial nach außen getrieben wurden und somit jede Rückstelleinrichtung 20 sowohl in als auch entgegen der Umfangsrichtung 13 an den jeweiligen Umfangsabstützbereichen der ihnen zugeordneten Abstützelemente 16 anliegt. Die unterschiedlichen Situationen der oberen und unteren Hälfte werden selbstverständlich im normalen Betrieb nie gleichzeitig auftreten, sind hier jedoch der Übersichtlichkeit halber und zum besseren Verständnis zusammen in einer Figur dargestellt.

Zusammengefasst zeigt Fig. 2 eine Schnittdarstellung eines Tilgers bzw. einer Drehschwingungsdämpfungsanordnung, in der in der oberen Hälfte die Position der Gleitsteine bzw. der Abstützelemente 16 bei niedriger Drehzahl und demzufolge radial innen dargestellt ist. In dieser Position ist, wie aus den Fig. 3a - 4b auch im Detail dargestellt, eine Anlage bzw. ein Umfangsabstützbereich 58 bei jeder der Rückstellelemente 42 bzw. Tilgerfedern weggeklappt. Jede der Tilgerfedern bzw. Rückstellelemente 42 liegt somit nur an einer Anlage bzw. nur an einem Umfangsabstützbereich an, und kann somit nur entweder für Zug oder für Schub, d. h. in oder entgegen der Umfangsrichtung 13 wirken.

Dadurch wird eine niedrige Steifigkeit der Drehschwingungsdämpfungsanordnung und damit eine niedrige Abstimmungsfrequenz bzw. eine Abstimmungsordnung erreicht. Sind, wie in dem in Fig. 2 gezeigten Ausführungsbeispiel, die Rückstellelemente 42 des ersten Schalttyps mit den ihnen jeweils zugeordneten Abstützelementen 16 und die Rückstellelemente 42 des zweiten Schalttyps immer paarweise, einmal in und einmal entgegen der Umfangsrichtung 13 wegklappend verbaut bzw. angeordnet, ergibt sich ein, bezogen auf die Drehachse, symmetrische Verhalten unter Vermeidung von Unwuchten. Vorliegend sind fünf rechts- und fünf linksseitige Gleitsteinbaugruppen bzw. Rückstellelemente 42 des ersten und zweiten Schalttyps dargestellt. Es versteht sich von selbst, dass bei alternativen Ausführungsbeispielen eine beliebige andere Kombination der Rückstellelemente 42 unterschiedlicher Schalttypen vorgenommen werden kann. Insbesondere können auch Rückstellelemente 42 verwendet werden, die permanent in als auch entgegen der Umfangsrichtung 13 kraftschlüssig an den Träger 12 angebunden sind.

Bei steigender Drehzahl wird das Abstützelement 16, wie in der unteren Hälfte der Fig. 2 dargestellt, in den zweiten Bereich von Positionen 92 für da des Abstützelement 16 geschoben, in welchem die Führung 14 für die Abstützelemente 16 zwei parallel zueinander verlaufende Wände hat. Dadurch wird der erste Umfangsabstützbereich 58 an das Rückstellelement 42 zur Anlage gebracht. Daraufhin ist jedes der Rückstellelemente 42 sowohl bei Zug als auch bei Schub im Eingriff, wodurch sich durch diese Verdopplung der Anzahl der parallel geschalteten Rückstellelemente 42 auch die Steifigkeit der Drehschwingungsdämpfungsanordnung verdoppelt, was zu einer Erhöhung der Abstimmungsfrequenz bzw. der Abstimmungsordnung führt. Selbstverständlich können alternativ auch nicht sämtliche der Abstützelemente 16 schaltbar ausgeführt werden, sodass sich Zwischenverhältnisse, beispielsweise Veränderungen der Abstimmungsfrequenz bzw. der Abstimmungsordnung um den Faktor 0,75 bzw. um einen beliebigen anderen Faktor darstellen lassen.

Allgemein bedeutet eine Vervierfachung der Steifigkeit eine Verdoppelung der Abstimmungsfrequenz bzw. der Ordnung, eine doppelte Steifigkeit eine Erhöhung der Abstimmungsfrequenz um den Faktor $\sqrt{2}$ und eine Halbierung der Steifigkeit eine Senkung der Ordnung um den Faktor $1/\sqrt{2}$. Fig. 3a zeigt ein Ausführungsbeispiel eines Abstützelements 16, einen Biegegleitstein, in der geöffneten Position. Der Biegegleitstein besitzt eine schaltbare Anlage bzw. ein Gelenkteil 76, in der der Federanlagebereich bzw. der erste Umfangsabstützbereich 58 angebracht ist, der über das elastische Element 82 mit dem übrigen Gleitstein, d. h. mit dessen festem Teil 80, verbunden ist. Diese Bindung kann geschraubt, geschweißt, geklebt, gelötet, genietet oder durch Umformprozesse form-, stoff- und/oder kraftschlüssig realisiert sein. Das elastische Element 82 stellt sicher, dass der zweite Federanlagebereich bzw. der Umfangsabstützbereich 58 zuverlässig in die in Fig. 3a gezeigte Ruheposition, in der sich dieser nicht im Eingriff mit dem Rückstellelement 42 befindet, gebracht wird, wenn der Gleitstein, wie in Fig. 2 dargestellt, innerhalb des ersten Bereichs von Positionen 72 der Führungskontur, also radial innen, angeordnet ist.

Fig. 3b zeigt den in Fig. 3a dargestellten Biegegleitstein bzw. das Abstützelement 16 in einer geschlossenen Konfiguration. Durch das Herauswandern gegen die Kraft der Vorspannfeder 20 wandert das Abstützelement 16 nach radial außen, sodass das Abstützelement 16 in den parallelen Bereich der Führung 14 eintaucht und der Abstand der beiden Anlagebolzen 56 und 54, die die Umfangsabstützbereiche 58 und 60 bilden, minimal wird.

Fig. 4a zeigt einen Gelenkgleitstein in der zu Fig. 3a korrespondierenden offenen Stellung. Anstelle der elastischen Befestigung 82, wie sie in den Fig. 3a und 4a gezeigt ist, ist die schaltbare Anlage bzw. das Gelenkteil 76 des Abstützelements 16 in den Fig. 4a und 4b durch ein Bolzengelenk 84 mit dem festen Teil 80 verbunden. Ein zusätzlich eingefügtes elastisches Element 86 stellt eine eindeutige Position des eingelenkten Teils sicher und vermeidet ein unkontrolliertes Zuschalten weiterer Rückstellelemente 42. Fig. 4b zeigt den Gelenkgleitstein der Fig. 4a in einer geschlossenen Konfiguration, die der in Fig. 3b gezeigten Konfiguration des Biegegleitsteins entspricht.

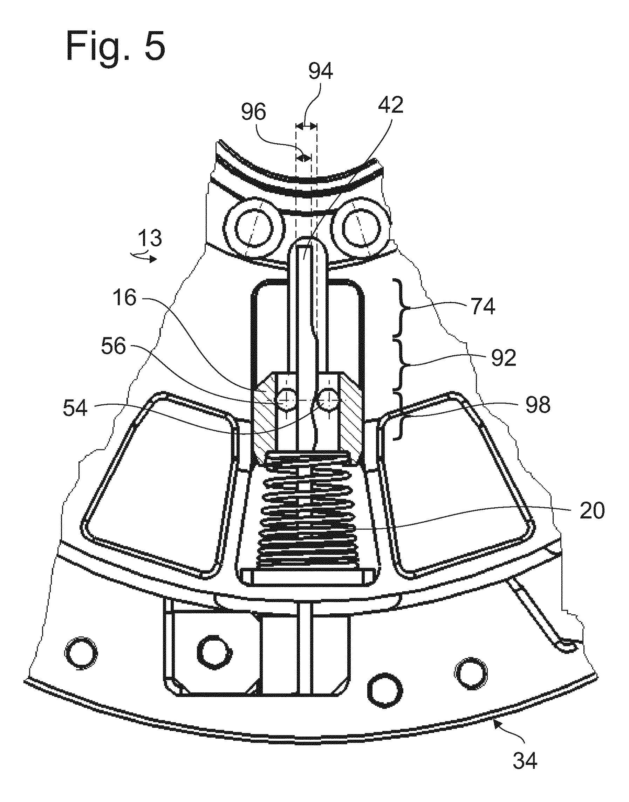

Fig. 5 zeigt ein weiteres Ausführungsbeispiel einer Drehschwingungsdämpferanordnung, bei der ein sprunghafter Verlauf der Steifigkeit der Kopplung zwischen der Trägeranordnung 12 und der Auslenkungsmasse 34 durch die Form des Rückstellelements 42 bewirkt wird. Insbesondere ist zu diesem Zweck die Ausdehnung 94 des Rückstellelements 42 innerhalb des ersten Bereichs von Positionen 74 des Rückstellelements 16 in der Umfangsrichtung 13 geringer als innerhalb des daran angrenzenden zweiten Bereichs 92 von Positionen des Rückstellelements 16. Das heißt, die Ausdehnung des Rückstellelements 42 bzw. dessen Dicke in der Umfangsrichtung 13 ist innerhalb des ersten Bereichs von Positionen 74 geringer, sodass in diesem Bereich das Rückstellelement 42 nicht in Anlage zum ersten Umfangsabstützbereich am Bolzen 54 des Rückstellelements 16 gelangen kann und dadurch die Rückstellkraft des Rückstellelements 42 in diesem Bereich bei einer Bewegung in der Umfangsrichtung 13 abgeschaltet ist. Sobald sich unter dem Einfluss der Fliehkraft das Abstützelement 16 radial nach außen bis in den zweiten Bereich von Positionen 92 bewegt, gerät der zweite Umfangsabstützbereich 58 des Stiftes 54 in Kontakt mit dem Rückstellelement 42 und die Kopplung in der Umfangsrichtung 13 wird wiederhergestellt, wodurch die Steifigkeit der von dem Rückstellelement 42 in der Umfangsrichtung 13 bewirkten Kopplung zwischen Trägeranordnung und Auslenkungsmasse sprunghaft ansteigt.

Bei dem in Fig. 5 gezeigten Ausführungsbeispiel ist ferner eine dritte Schaltstufe verwirklicht, d. h. innerhalb eines dritten Bereichs von Positionen 98, der sich radial außerhalb des zweiten Bereichs von Positionen 92 befindet, ist die Steifigkeit der Kopplung wieder geringer als in dem zweiten Bereich von Positionen 92, was vorliegend dadurch verwirklicht wird, dass auch in dem dritten Bereich von Positionen 98 die Ausdehnung des Rückstellelements 42 in der Umfangsrichtung 13 geringer ist als innerhalb des zweiten Bereichs von Positionen 92.

Vorliegend ist im ersten Bereich von Positionen 74 und im dritten Bereich von Positionen 98, die axiale Ausdehnung des Rückstellelements 42 größer als in dem zweiten Bereich von Positionen 92, sodass die Biegesteifigkeit entgegen der Umfangsrichtung 13, in der die Kopplung nicht abgeschaltet wird, über den gesamten radialen Positionsverlauf des Abstützelements 16 identisch bleibt. Zu diesem Zweck ist die axiale Ausdehnung des Rückstellelements 42 bevorzugt derart erhöht, dass ein Flächenträgheitsmoment des Rückstellelements 42 im zweiten Bereich 92 demjenigen im ersten und dritten Bereich 74 und 98 entspricht.

Gemäß einigen Ausführungsbeispielen der Erfindung wird also, wie in Fig. 5 illustriert, eine profilierte Tilgerfeder bzw. ein profiliertes Rückstellelement 42 verwendet. Durch die unterschiedliche Dicke des profilierten Rückstellelements 42 entlang dessen radialem Verlauf kann das Eingriffsverhalten der Tilgerfeder bzw. des Rückstellelements 42 von der radialen Position des Gleitsteins bzw. des Abstützelements 16 und damit von der Drehzahl abhängig gemacht werden. Dadurch können einzelne Rückstellelemente 42 bezüglich deren Wirksamkeit in der Umfangsrichtung 13 bzw. sowohl in als auch entgegen der Umfangsrichtung 13 zu- bzw. abgeschaltet werden. Es hängt von der Kontur des Dickenverlaufs bzw. des Verlaufs der Ausdehnung der Rückstellelemente 42 in der Umfangsrichtung 13 ab, ob abhängig von der radialen Position des Abstützelements 16 beide Federanlagen bzw. beide Umfangsabstützbereiche 58 und 60 zum Abstützen der des Rückstellelements 20 dienen oder nur einer der beiden. Im in Fig. 5 dargestellten Fall ist dies beispielsweise der Stift 54. Dadurch kann also festgelegt werden, ob in einem System, das mehrere solche Rückstellelemente 42 aufweist, alle oder nur ein Teil der Rückstellelemente 42 in einer bestimmten Richtung wirken. Vorteilhafterweise kann der durch den Dickenunterschied hervorgerufene Unterschied im Flächenträgheitsmoment gegen Biegung durch eine angepasste Breite der Rückstellelemente 42 in dem Bereich kompensiert werden, in dem diese eine verringerte Ausdehnung in der Umfangsrichtung 13 besitzen.

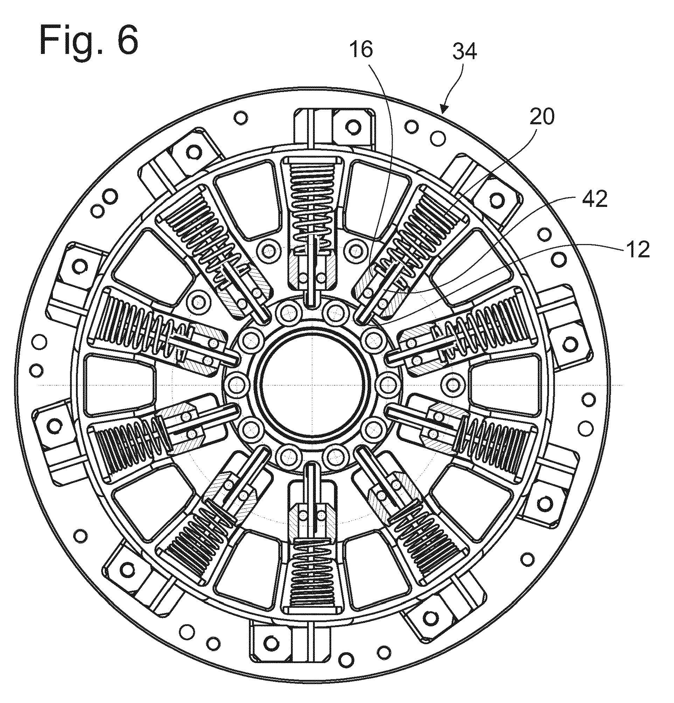

Die Fig. 6 - 9 zeigen ein weiteres Ausführungsbeispiel einer Drehschwingungsdämpfungsanordnung, bei der ein Querschnitt des Rückstellelements 42 entlang der radialen Ausdehnung desselben näherungsweise konstant ist, wobei innerhalb des zweiten Bereichs von Positionen 92 auf der in der Umfangsrichtung liegenden Seite des Rückstellelements 42 ein Blech 100 angeordnet ist, welches derart dimensioniert ist, dass im zweiten Bereich von Positionen 92 das Rückstellelement 42 über das Blech 100 an der radialen Position des Abstützelements 16 in der Umfangsrichtung 13 bezüglich der Trägeranordnung 12 abgestützt wird. Hinsichtlich der gewählten Darstellung der Ansicht auf die Drehschwingungsdämpferanordnung in Fig. 6 gilt dasselbe wie zu dem in Fig. 2 Gesagten. Das heißt, hier sind in der oberen Hälfte und in der unteren Hälfte unterschiedliche im Betrieb auftretende Konfigurationen dargestellt, die im Realbetrieb nie gleichzeitig auftreten können und hier jedoch zum besseren Verständnis zusammen in einer Figur dargestellt sind.

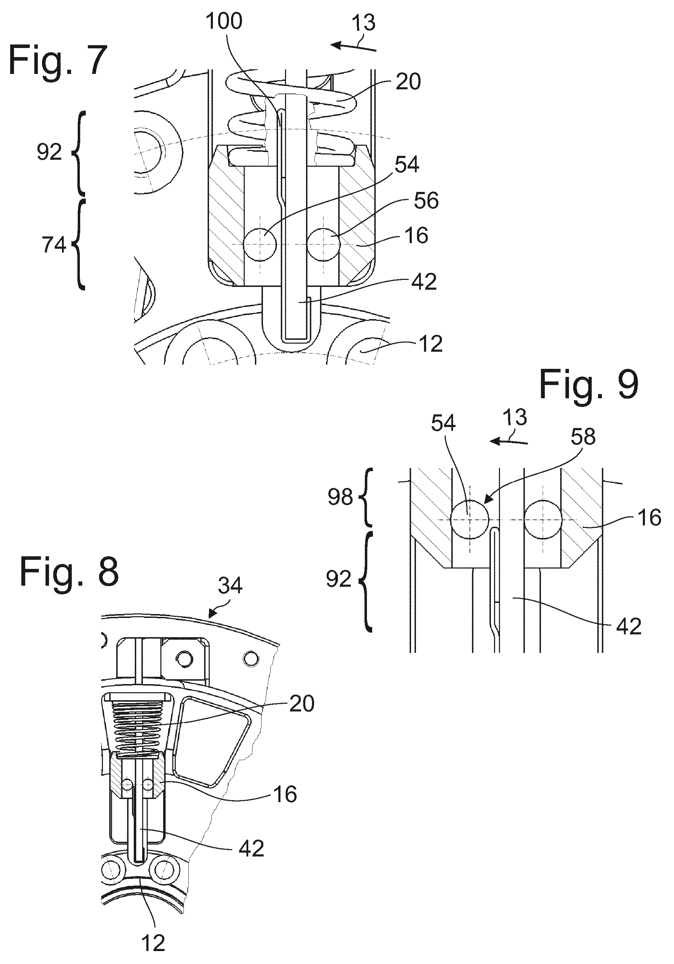

Die Funktionalität des Ausführungsbeispiels wird vorliegend daher überwiegend anhand der Fig. 7 - 9 diskutiert.

Als Blech 100 in dem oben genannten Sinne ist dabei jedwedes von dem Material des Rückstellelements 42 getrenntes Material zu verstehen, welches stabil genug ist, die im Betrieb auftretende Last abstützen zu können, wenn sich das Rückstellelement 42 über das Blech 100 an dem Stift 56 abstützt.

Die Verwendung eines zusätzlichen Blechs 100 hat den Vorteil, dass die Schaltcharakteristik, also das bewusste Herbeiführen eines sprunghaften Anstiegs oder Abfalls der Steifigkeit der Kopplung zwischen Trägeranordnung 12 und Auslenkungsmasse 34, mit einem zusätzlichen Element erzeugt wird und dadurch die Biegecharakteristik des Rückstellelements 42 durch die die Schalteigenschaften bestimmenden Komponenten nicht beeinträchtigt wird. Das heißt, ohne die vorhandene Konstruktion eines Rückstellelements 42 verändern zu müssen, kann durch unterschiedliche Dimensionierung von Blechen 100 eine nahezu beliebige Schaltcharakteristik bzw. eine beliebige Charakteristik der Kopplungssteifigkeit erreicht werden. Dies ermöglicht insbesondere die Verwendung eines kostengünstigen Baukastensystems, mittels dessen mit einer Anzahl von vorgefertigten Teilen beliebige Charakteristika implementiert werden können.

Bei dem in den Fig. 6 - 9 gezeigten Ausführungsbeispiel erstreckt sich das Blech 100 radial bis an das innere Ende des Rückstellelements 42 und ist dort um dieses umgeschlagen. Dies kann während der Fertigung dazu dienen, dass die unterschiedlichen Komponenten eines Baukastensystems durch einfaches Einklipsen eines an die erforderliche Schaltcharakteristik angepassten Blechs 100 bereitgestellt werden können, indem das Blech 100 an dessen radial innere Ende um das Rückstellelement 42 gelegt oder geklipst wird. Das heißt, die in den Fig. 6 - 9 gezeigten Ausführungsbeispiele ermöglichen den Aufbau eines wirtschaftlichen Baukastens, mittels dessen die Feder- und Schalteigenschaften unabhängig voneinander zu einer großen Vielzahl an Kennlinien für die Steifigkeit der Kopplung zwischen Trägeranordnung 12 und Auslenkungsmasse 34 kombiniert werden können.

Dabei versteht es sich von selbst, dass die Verbindung zwischen dem Blech 100 und dem Rückstellelement 42 auf jedwede andere Art form-, kraft- oder stoffschlüssig hergestellt werden kann.

Wie bei aus der in Fig. 9 gezeigten Detailansicht offenbar wird, ist es mittels des Blechs 100 darüber hinaus möglich, eine zumindest dreistufige Schaltcharakteristik zu erzielen, da das Abstützelement 16 bei Verlassen des zweiten Bereichs von Positionen 92 den Kontakt zum Rückstellelement 42 bzw. den Kraftschluss zu diesem wieder verliert, sodass die Kopplung in der Umfangsrichtung 13 in dem dritten Bereich von Positionen 98 erneut aufgehoben ist. Prinzipiell ist es selbstverständlich auch möglich, mehrstufige Schaltcharakteristika zu verwirklichen, indem beispielsweise das Blech im zweiten Bereich von Positionen 92 dreifach gefaltet wird und sich radial nach weiter außen über den dritten Bereich von Positionen 98 erstreckt, woraufhin sich wieder ein dreifach gefalteter Bereich anschließen könnte, bei dem der Kraftschluss wieder hergestellt ist.

Wie in Fig. 7 besonders gut sichtbar, ist das Blech 100 also auf das Rückstellelement 42 von radial innen aufgesteckt, was dazu führt, dass es auch bei großer Drehzahl sicher gehalten wird. Im zweiten Bereich von Positionen 92 ist das Blech 100 beispielsweise durch ein oder mehrfaches Umlegen verdickt, d. h. die Ausdehnung in Umfangsrichtung 13 ist erhöht, sodass bei einer Position des Abstützelements 16 innerhalb des zweiten Bereichs von Positionen 92, genauer gesagt, wenn sich der Stift 54 bzw. der Umfangsabstützbereich 58 an dem Stift 54 innerhalb des zweiten Bereichs von Positionen 92 befindet, das Rückstellelement 42 in beide Richtungen an den Stiften 54 und 56 anliegt, sodass bei der in Fig. 6 dargestellten Anordnung von Rückstellelementen 20 alle dieser Rückstellelemente parallel wirken.

Wie bereits erwähnt, ermöglicht das in den Fig. 6 - 9 dargestellte Blech 100 bzw. Schaltblech drei mögliche Zustände. Im ersten Bereich von Positionen 74, in der das Abstützelement 16 bzw. der Gleitstein mit den Umfangsabstützbereichen 58 und 60 radial weit innen liegt (also bei kleiner Drehzahl), ist der erste Umfangsabstützbereich 58 für das Rückstellelement 42 freigestellt und die Steifigkeit des gesamten Tilgers entsprechend klein. Im zweiten Bereich von Positionen 92 wirken sowohl der erste als auch der zweite Umfangsabstützbereich 58 und 60 als Anlage für das Rückstellelement 42, also zug- und schubseitig. In der radial äußeren Position, also im dritten Bereich von Positionen 98, wirkt wiederum nur eine Anlage, sodass dort die Steifigkeit des Rückstellelements 42 bzw. dessen effektive Kopplung zwischen Träger 12 und Auslenkungsmasse 34 wieder geringer ausfällt. Somit kann auf beliebige Art und Weise die Abstimmung der gesamten Drehschwingungsdämpfungsanordnung drehzahlabhängig vorgenommen werden, insbesondere hinsichtlich der zu tilgenden Frequenz bzw. der Ordnung der Drehunförmigkeit.

In Fig. 9 ist im Speziellen der Zustand bei hoher Drehzahl in einer Vergrößerung dargestellt, bei der das Abstützelement 16 sehr weit radial außen steht und nur noch einer der beiden Stifte, nämlich Stift 54, das Rückstellelement 42 abstützt.

Alternativ dazu kann in weiteren Ausführungsbeispielen der verdickte Bereich des Blechs 100 in dem ersten Bereich von Positionen 74 nach radial innen verlegt werden, sodass gleich zu Beginn, also bei kleiner Drehzahl, alle Rückstellelemente 42 im Eingriff sind und das System der Drehschwingungsdämpferanordnung auf die Tilgung beispielsweise der zweiten Ordnung (der Hauptanregenden) eines Vier-Zylinder-Motors abgestimmt werden kann. Dann kann beispielsweise bei höherer Drehzahl durch gezielte Deaktivierung von einzelnen Rückstellelementen 42 die Steifigkeit auf ein Viertel gesenkt werden, was einer Abstimmung der Drehschwingungsdämpferanordnung auf die erste Ordnung eines Zwei-Zylinder-Motors entspricht. Dies kann beispielsweise bei Motoren mit kontrollierter, drehzahlabhängiger Zylinderabschaltung von besonderem Vorteil sein, da dann in allen Betriebszuständen die Drehungleichförmigkeiten maximal gedämpft werden können.

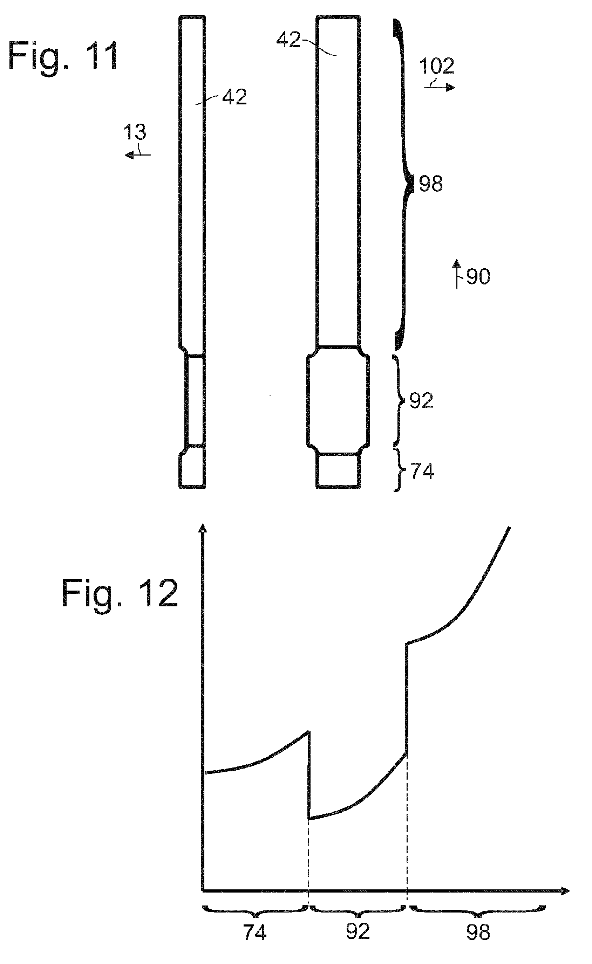

Weitere Beispiele, in denen eine solche Auslegung vorteilhaft ist, sind die Zylinderabschaltungen von acht auf vier Zylinder bzw. von sechs auf drei Zylinder. Eine dazu korrespondierende Kennlinie wird nachfolgend, Bezug nehmend auf das in Fig. 11 dargestellte Ausführungsbeispiel noch genauer diskutiert.

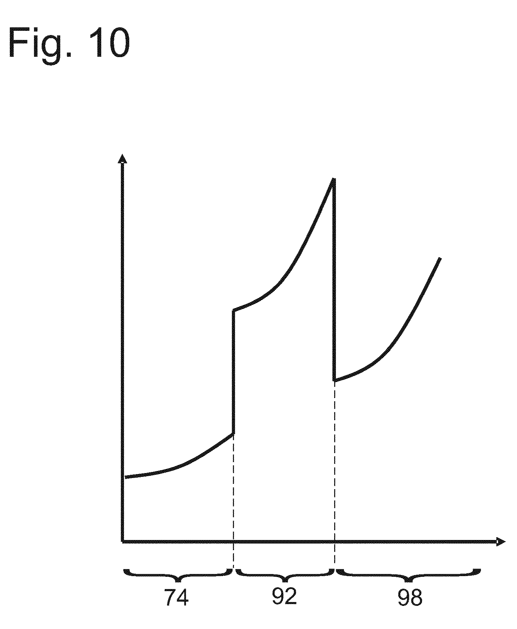

Fig. 10 zeigt eine Kennlinie der Steifigkeit der Kopplung zwischen dem Träger 12 und der Auslenkungsmasse 34, wie sie mit den anhand der Fig. 2 - 9 diskutierten Ausführungsbeispielen von Drehschwingungsdämpferanordnungen erzielt werden kann. Dazu zeigt Fig. 10 auf der x-Achse in willkürlichen Einheiten die Drehzahl des Antriebsstrangs und auf der y-Achse in ebenfalls willkürlichen Einheiten die Steifigkeit der Kopplung, also qualitativ gesprochen, die Kraft, mit der die Summe der Rückstellelemente 42 in der Drehschwingungsdämpferanordnung eine Auslenkung der Auslenkungsmasse 34 aus ihrer Ruhelage entgegen wirken.

Mit den beschriebenen Ausführungsbeispielen von Drehschwingungsdämpferanordnungen kann die beispielhaft dargestellte dreistufige Kennlinie umgesetzt werden. Im ersten Bereich von Positionen 74 kann unter dem Einfluss des sich radial nach außen bewegenden Abstützelements 16 die Steifigkeit der Hälfte bzw. einer beliebigen Anzahl der angekoppelten Rückstellelemente 42 über die Drehzahl progressiv ansteigen. Im zweiten Bereich von Positionen 92 ist die Steifigkeit sprunghaft erhöht, d. h. an der Position bzw. Grenze zwischen dem ersten Bereich von Positionen 74 und dem zweiten Bereich von Positionen 92 verändert sich die Steifigkeit der von den Rückstellelementen in der Umfangsrichtung 13 bewirkten Kopplung sprungartig. Gemäß einigen Ausführungsbeispielen kann die Abstimmung derart gewählt sein, dass eine sprunghafte Verdopplung der Steifigkeit auftritt, wenn sich das Abstützelement 16 aus dem ersten Bereich von Positionen 74 in den zweiten Bereich von Positionen 92 bewegt, da nun alle Rückstellelemente 42 in beide Bereiche wirken können. Im dritten Bereich von Positionen 98 kann beispielsweise wieder die gleiche Abstimmung wie im ersten Bereich von Positionen 74 gewählt werden, bei der die Hälfte der Rückstellelemente 42 in einer Richtung deaktiviert sind, sodass durch die herkömmliche Ordnungsnachführung durch die gestiegene Drehzahl auch die Steifigkeit der Kopplung zwischen Träger 12 und Auslenkungsmasse 34 entsprechend höher ist. Mit anderen Worten ist dann die Kennlinie im dritten Bereich von Positionen 98 eine Fortsetzung derjenigen im ersten Bereich von Positionen 74. Wie bereits vorhergehend ausgeführt, kann die Anzahl von Rückstellelementen 42 eines ersten und eines zweiten Schalttyps, also diejenigen, die in Umfangsrichtung 13, und diejenigen, die entgegen der Umfangsrichtung 13 deaktivierbar sind, beliebig kombiniert werden. Es ist allerdings von Vorteil, auf einen symmetrischen Aufbau abzuzielen, um Unwuchten im System zu vermeiden.

Fig. 11 zeigt ein Rückstellelement 42, wie es in einem weiteren Ausführungsbeispiel einer Drehschwingungsdämpferanordnung verwendet werden kann, die zu dem in Fig. 12 gezeigten Profil bzw. der dort qualitativ dargestellten drehzahlabhängigen Kennlinie der Steifigkeit zwischen der Kopplung des Trägers 12 und der Auslenkungsmasse 34 führen kann. Der Mechanismus, der bei dem in Fig. 11 dargestellten Rückstellelement 20 mit einem in radialer Richtung 90 variierenden Dickenprofil zu einer Veränderung der Kennlinie führt, entspricht demjenigen, der bereits anhand des Ausführungsbeispiels von Fig. 5 diskutiert wurde, sodass bezüglich der Einzelheiten der diesbezüglichen Diskussion auf dieses Ausführungsbeispiel verwiesen wird.

Bei dem in Fig. 11 gezeigten Ausführungsbeispiel ist die Ausdehnung des Rückstellelements 42 in Umfangsrichtung 13 in dem radial innen liegenden ersten Bereich von Positionen des Rückstellelement 74 größer als in dem daran angrenzenden zweiten Bereich von Positionen 92. Daran schließt sich ein dritter Bereich von Positionen 98 an, in dem die Ausdehnung in Umfangsrichtung 13 wieder derjenigen im ersten Bereich 74 entspricht. Das heißt, durch die in Fig. 11 dargestellte Dickenvariation des Rückstellelements 42 in der radialen Richtung 90 ergibt sich eine Konfiguration, bei der innerhalb eines radial innen liegenden ersten Bereichs 74 von Positionen des Abstützelements 16 eine Steifigkeit der Kopplung höher ist als in einem daran angrenzenden radial weiter außen liegenden zweiten Bereich von Positionen 92. Darüber hinaus ist innerhalb eines an den zweiten Bereich angrenzenden radial außerhalb des zweiten Bereichs 92 liegenden dritten Bereichs 98 von Positionen des Abstützelements 16 die Steifigkeit der Kopplung wieder höher als in dem zweiten Bereich. Die Übergänge zwischen dem ersten Bereich 74 und dem zweiten Bereich 92 sowie zwischen dem zweiten Bereich 92 und dem dritten Bereich 98 sind sprunghaft. Daraus ergibt sich die in Fig. 12 dargestellte Kennlinie, wobei analog zu dem in Fig. 10 gezeigten Verlauf auf der x-Achse in willkürlichen Einheiten die Drehzahl des Antriebsstrangs und auf der y-Achse in willkürlichen Einheiten die Steifigkeit der Kopplung zwischen dem Träger 12 und der Auslenkungsmasse 34 dargestellt ist.

Im ersten Bereich von Positionen 74, der auf niedrige Drehzahlen abgestimmt ist, kann beispielsweise die Drehschwingungsdämpferanordnung durch die dort erhöhte Steifigkeit vor Überlastung geschützt werden, bevor bei einer definierten Drehzahl in den zweiten Bereich von Positionen 92 übergegangen wird, wo die Tilgung bzw. Dämpfung derjenigen Ordnung von Drehungleichförmigkeiten beginnt, auf die die Drehschwingungsdämpfungsanordnung abgestimmt ist. Nach dem Übergang in den dritten Bereich von Positionen 98 werden die bisher abgeschalteten Rückstellelemente 42 wieder zugeschaltet, sodass die Abstimmungsfrequenz bzw. die Ordnung der Abstimmung der Schwingungsdämpfungsanordnung wieder erhöht wird, um bei weiter steigender Drehzahl einen Tilgungseffekt bzw. eine Dämpfung zu ermöglichen. Sofern die Abstimmung mittels der in Fig. 11 und 12 illustrierten Ausführungsbeispiele auf einem Antriebsstrang ohne Zylinderabschaltung vorgenommen wird, kann innerhalb des dritten Bereichs von Positionen 98 noch ein Tilgungseffekt erzielt werden, wenngleich dieser über den eigentlichen zu erwartenden dynamischen Bereich hinausgeht.

Alternativ dazu kann, wie im Vorhergehenden anhand des Ausführungsbeispiels der Fig. 6 - 9 bereits diskutiert, eine in Fig. 12 gezeigte Abstimmung in einem Szenario, bei dem bei einem Verbrennungsmotor in einem bestimmten Drehzahlbereich eine Zylinderabschaltung vorgenommen wird, der vorliegend dem zweiten Bereich von Positionen 92 entsprechen würde, besonders günstig sein. Ist beispielsweise der sprunghafte Abfall zwischen dem ersten Bereich von Positionen 74 und dem zweiten Bereich von Positionen 92 derart, dass durch den Abfall die Steifigkeit der Drehschwingungsdämpfungsanordnung auf ein Viertel gesenkt wird, kann zunächst in einem niedrigen Drehzahlbereich die volle Zylinderzahl, beispielsweise die Zahl von vier Zylindern, optimal gedämpft werden, woraufhin innerhalb des zweiten Bereichs von Positionen 92 die Hälfte der Zylinder abgeschaltet werden und die übrigen in einem optimalen, energiesparenden Betriebsmodus betrieben werden können. Sofern maximale Leistung im Antriebsstrang erforderlich ist, können ab einer weiteren Grenzdrehzahl, die der Grenze zwischen dem zweiten Bereich 92 und dem dritten Bereich 98 entspricht, die abgeschalteten Zylinder wieder zugeschaltet werden, wobei gleichzeitig durch Ausführungsbeispiele erfindungsgemäßer Drehschwingungsdämpferanordnungen in sämtlichen Betriebsbereichen eine optimale Unterdrückung von Drehungleichförmigkeiten gewährleistet werden kann.

Darüber hinaus ist, wie in Fig. 11 ersichtlich, zur Aufrechterhaltung identischer Biegeeigenschaften entgegen der Umfangsrichtung 13 bei dem Rückstellelement 42 der Fig. 11 im zweiten Bereich von Positionen 92 die Ausdehnung desselben in der axialen Richtung 102 erhöht, sodass das Flächenträgheitselement im zweiten Bereich von Positionen 92 demjenigen im ersten Bereich von Positionen 74 und im dritten Bereich von Positionen 98 entspricht, um die Biegeeigenschaften des Rückstellelements 42 entgegen der Umfangsrichtung 13 nicht zu beeinträchtigen.

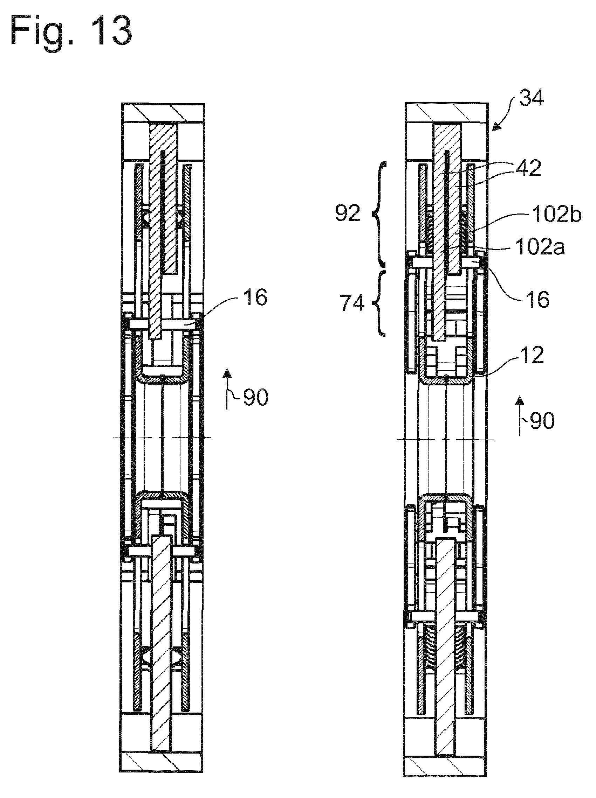

Fig. 13 zeigt ein weiteres Ausführungsbeispiel einer Drehschwingungsdämpfungsanordnung im Schnitt, bei der sprunghafte Übergänge in der Steifigkeit der Anbindung zwischen dem Träger 12 und der Auslenkungsmasse 34 durch eine Zweiteilung der sich radial erstreckenden Rückstellelemente 42 erzielt werden können. Um einen sprunghaften Anstieg der Steifigkeit der Kopplung beim Übergang zwischen dem ersten Bereich von Positionen 74 des Abstützelements 16 in den zweiten Bereich von Positionen 92 zu erzielen, ist bei dem in Fig. 13 dargestellten Ausführungsbeispiel das Rückstellelement 42 zweigeteilt, wobei sich ein erstes Teilelement 102a des Rückstellelements 20 nach radial innen bis in den ersten Bereich von Positionen 74 erstreckt und wobei sich ein zweites Teilelement 102b durch den zweiten Bereich von Positionen 92 und lediglich bis an die Grenze des ersten Bereichs von Positionen 74 erstreckt. Gleichzeitig sind beide Teilelemente 102a und 102b radial außen drehfest mit der Auslenkungsmasse 34 gekoppelt.

Ein sprunghafter Anstieg der Steifigkeit wird hier also dadurch erzielt, dass zwei voneinander im Hinblick auf ihre Biegeeigenschaften unabhängige Teilelemente 102a, b bzw. ein zweigeteiltes Rückstellelement 42 verwendet wird, wobei das zweite Teilelement 102b erst ab einer vorbestimmten radialen Position des Abstützelements 16 innerhalb des zweiten Bereichs von Positionen 92 in Eingriff mit dem Abstützelement 16 gerät und dann jedoch sowohl in als auch entgegen der Umfangsrichtung wirksam ist. Das in Fig. 13 dargestellte Ausführungsbeispiel hat unter anderem den Vorteil, dass durch die einfache Gestalt und Geometrie der Rückstellelemente 42 diese über die gesamte radiale Ausdehnung bzw. über die gesamte Biegelänge ein konstantes Flächenträgheitsmoment aufweisen. Darüber hinaus ist die Zu- bzw. Abschaltung einzelner Teilelemente unabhängig vom momentanen Dreh- bzw. Schwingwinkel der Auslenkungsmasse 34 bzw. des Tilgers. Je nach radialer Position des Abstützelements 16 bzw. der Drehumfangabstützbereiche ist entweder ein Teilelement 102a bzw. es sind beide Teilelemente 102a und 102b im Eingriff. Auch das in Fig. 13 dargestellte Design ermöglicht die Bereitstellung eines Baukastensystems, da die Abstützelemente 16 bei konstanter Federdicke immer identisch sein können, wobei durch die Länge der einzelnen Teilelemente, die in weiteren Ausführungsbeispielen auch mehr als zwei betragen können, unabhängig davon an die Erforderlichkeiten optimal angepasst werden kann.

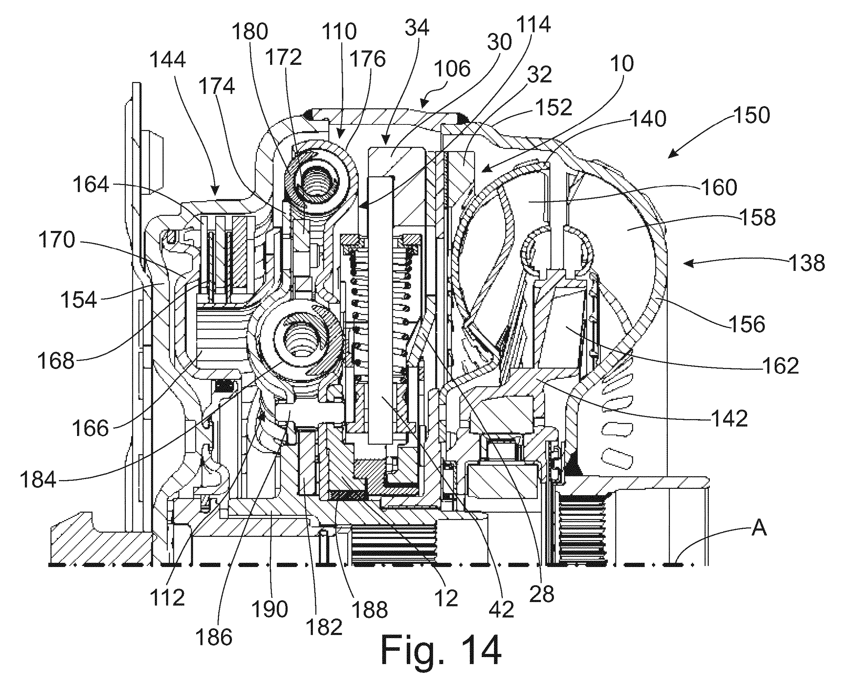

In Fig. 14 ist in konstruktiver Ausführung im Teillängsschnitt ein Anfahrelement mit einem hydrodynamischer Drehmomentwandler 150 dargestellt. Dessen Gehäuse 152 stellt einen rotierenden Nassraum 106 bereit und umfasst eine antriebsseitige Gehäuseschale 154 und eine abtriebsseitige Gehäuseschale 156, welche gleichzeitig auch eine Pumpenradschale bildet und an ihrer Innenseite eine Mehrzahl von in Umfangsrichtung um die Drehachse A aufeinander folgenden Pumpenradschaufeln 158 trägt. Dem so bereitgestellten Pumpenrad 138 liegt das Turbinenrad 140 mit seinen Turbinenradschaufeln 160 axial gegenüber. Zwischen dem Pumpenrad 138 und dem Turbinenrad 140 liegt das Leitrad 142 mit seinen Leitradschaufeln 162.

Die Überbrückungskupplung 144 umfasst mit der antriebsseitigen Gehäuseschale 154 zur Drehung gekoppelte antriebsseitige Reibelemente bzw. Lamellen 164 sowie mit einem Reibelemententräger 166 zur Drehung gekoppelte abtriebsseitige Reibelemente bzw. Lamellen 168. Diese können durch einen Kupplungskolben 170 zur Drehmomentübertragung bzw. zum Einrücken der Überbrückungskupplung 144 gegeneinander gepresst werden. Der im Drehmomentenfluss auf die Überbrückungskupplung 144 folgende und hier radial außen positionierte Drehschwingungsdämpfer 110 umfasst als Primärseite ein mit dem Reibelemententräger 166 gekoppeltes Zentralscheibenelement 172. Axial beidseits davon liegen Deckscheibenelemente 174, 176, welche mit ihrem radial äußeren Bereich im Wesentlichen die Sekundärseite des Drehschwingungsdämpfers 110 bereitstellen. Durch Dämpferfedern 180 des Drehschwingungsdämpfers 110 wird ein Drehmoment zwischen dem Zentralscheibenelement 172, also der Primärseite, und den Deckscheibenelementen 174, 176, also der Sekundärseite, übertragen.

Mit ihrem radial inneren Bereich bilden die Deckscheibenelemente 174, 176 eine Primärseite des radial innen positionierten zweiten Drehschwingungsdämpfers 112. Axial zwischen diesen miteinander fest verbundenen Deckscheibenelementen liegt ein weiteres Zentralscheibenelement 182, welches im Wesentlichen eine Sekundärseite des weiteren Drehschwingungsdämpfers 112 bereitstellt und durch Dämpferfedern 184 mit den Deckscheibenelementen 174, 176 zur Drehmomentübertragung gekoppelt ist.

Die beiden Deckscheibenelemente 174, 176 stellen im Wesentlichen auch die Zwischenmassenanordnung 114 bereit, an welche beispielsweise vermittels die beiden Deckscheibenelemente 174, 176 auch miteinander fest verbindenden Bolzen 186 der Träger 12 einer erfindungsgemäß aufgebauten Drehschwingungsdämpfungsanordnung 10 angekoppelt ist. Die Schwungmasse 34 der Drehschwingungsdämpfungsanordnung 10 umfasst die beiden Masseringe 30, 32 sowie die Trägerscheibe 28 und liegt axial im Wesentlichen zwischen den beiden radial gestaffelt angeordneten Drehschwingungsdämpfern 110, 112 und dem Turbinenrad 140. Durch die Formgebung des Masserings 32 mit radial innen angeschrägter Kontur kann dieser das Turbinenrad 140 axial übergreifend positioniert werden, so dass eine axial kompakte Baugröße ermöglicht ist.

Die beiden in den vorhergehenden Absätzen als unabhängige und hintereinander angeordnete Drehschwingungsdämpfer 110 und 112 beschriebenen Anordnungen können in einer äquivalenten Sichtweise auch als ein einziger, zweistufiger Drehschwingungsdämpfer aufgefasst werden, dessen Primärseite durch das Zentralscheibenelement 172 und dessen Sekundärseite durch das weitere Zentralscheibenelement 182 gebildet wird. Die als zweistufiger Drehschwingungsdämpfer betrachtete Anordnung weist eine erste und eine zweite Federanordnung bzw. Dämpferfedern 180 und 184 auf, wobei als Zwischenelement die Deckscheibenelemente 174 und 176 gegen die Rückstellwirkung der ersten Federanordnung 180 bezüglich der Primärseite 172 drehbar sind und wobei die Sekundärseite 182 gegen die Rückstellwirkung der zweiten Federanordnung 184 bezüglich dem Zwischenelement 174, 176 drehbar ist.

Selbstverständlich kann in weiteren Anfahrelementen auch lediglich ein einziger einstufiger Drehschwingungsdämpfer verwendet werden, also eine Anordnung, bei der eine Sekundärseite gegen die Rückstellwirkung einer einzigen Federanordnung bezüglich der Primärseite drehbar ist.

Man erkennt, dass der Träger 12 radial innen über ein Lager 188, beispielsweise Gleitlager oder Wälzkörperlager, auf einer an das weitere Zentralscheibenelement 182 angebundenen Ausgangsnabe 190 der Drehschwingungsdämpfungsanordnung 10 drehbar gelagert ist. Mit dieser Ausgangsnabe 190 ist auch das Turbinenrad 140 beispielsweise durch Verzahnungseingriff zur gemeinsamen Drehung verbunden, so dass das über das Turbinenrad geleitete Drehmoment unter Umgehung der beiden seriell wirksamen Drehschwingungsdämpfer 110, 112 in die Abtriebsnabe 190 eingeleitet wird. Alternativ könnte, wie vorangehend bereits dargelegt, das Turbinenrad 140 an den Träger 12 bzw. allgemein die Zwischenmasse 114 angekoppelt werden oder an die Auslenkungsmasse 34 angekoppelt werden, um deren Massenträgheitsmoment zu erhöhen.

Wenngleich vorhergehend überwiegend für den Antriebsstrang eines PKWs diskutiert, versteht es sich von selbst, dass Ausführungsbeispiele von Drehschwingungsdämpfungsanordnungen auch in beliebigen anderen rotierenden Systemen, beispielsweise von Landmaschinen, LKWs oder stationären Aggregaten verwendet werden können.

Bezugzeichen

| | |
|---|---|
| 10 | Drehschwingungsdämpfungsanordnung |
| 12 | Träger |
| 13 | Umfangsrichtung |
| 14 | Führung |
| 16 | Abstützelement |
| 18 | Anschlag |
| 20 | Vorspannfeder |
| 22 | ringartiger Randbereich des Trägers |
| 24 | Radiallager |
| 26 | Axiallager |
| 28 | Trägerscheibe |
| 30 | Massering |
| 32 | Massering |
| 34 | Auslenkungsmasse |
| 36 | langgestreckte Aussparungen |
| 38 | Axialsicherungsring |
| 40 | Bolzen |
| 42 | Rückstellelement |
| 50 | radial innerer Endbereich |
| 52 | Öffnung |
| 54 | Stift |
| 56 | Stift |
| 58 | erster Umfangsabstützbereich |
| 60 | zweiter Umfangsabstützbereich |
| 68 | Führungsvorsprung |
| 71 | Führungsaussparung |
| 72 | Auslenkungsmassenpendeleinheit |
| 74 | erster Bereich von Positionen |
| 76 | Gelenkteil |
| 80 | fester Teil |
| 82 | Federblech |
| 84 | Stift |
| 86 | elastisches Element |
| 90 | radiale Richtung |
| 92 | zweiter Bereich von Positionen |
| 94 | Ausdehnung |
| 98 | dritter Bereich von Positionen |
| 100 | Blech |
| 102 | axiale Richtung |
| 102a | erstes Teilelement |
| 102b | zweites Teilelement |
| 106 | Nassraum |
| 110 | Drehschwingungsdämpfer |
| 112 | zweiter Drehschwingungsdämpfer |
| 138 | Pumpenrad |
| 140 | Turbinenrad |
| 142 | Leitrad |
| 144 | Überbrückungskupplung |
| 150 | hydrodynamischer Drehmomentwandler |
| 152 | Gehäuse |
| 154 | antriebsseitige Gehäuseschale |
| 156 | abtriebsseitige Gehäuseschale |

158    Pumpenradschaufeln
160    Turbinenradschaufeln
162    Leitradschaufeln
164    antriebsseitige Lamellen
166    Reibelemententräger
168    abtriebsseitige Lamellen
170    Kupplungskolben
172    Zentralscheibenelement
174    Deckscheibenelement
176    Deckscheibenelement
180    Dämpferfedern
182    weiteres Zentralscheibenelement
186    Bolzen
188    Lager
184    Dämpferfedern
190    Ausgangsnabe

**Patentansprüche**

1.  Drehschwingungsdämpfungsanordnung (10), insbesondere für einen Antriebsstrang eines Fahrzeugs, umfassend:

    eine um eine Drehachse drehbare Trägeranordnung (12);
    eine zu der Trägeranordnung (12) in einer Umfangsrichtung (13) relativ bewegliche Auslenkungsmasse (34);
    zumindest einem sich radial erstreckenden elastisch deformierbaren Rückstellelement (42), mittels dessen die Trägeranordnung (12) und die Auslenkungsmasse (34) relativ zueinander verdrehbar gekoppelt sind;
    einem dem Rückstellelement (42) zugeordneten radial relativ zu dem Rückstellelement (42) beweglichen Abstützelement (16), mittels dessen das Rückstellelement (42) an einer radialen Position des Abstützelements (16) in der Umfangsrichtung (13) bezüglich der Trägeranordnung (12) abgestützt wird;

    **dadurch gekennzeichnet, dass**

    eine Steifigkeit der von dem Rückstellelement (42) in der Umfangsrichtung (13) bewirkten Kopplung zwischen der Trägeranordnung (12) und der Auslenkungsmasse (34) an zumindest einer radialen Position des Abstützelements (16) einen sprunghaften Verlauf hat.

2.  Drehschwingungsdämpfungsanordnung (10) nach Anspruch 1, bei der an der radialen Position des Abstützelements (16) die Abstützung des Rückstellelements (42) bezüglich der Trägeranordnung (12) aufgehoben wird.

3.  Drehschwingungsdämpfungsanordnung (10) nach Anspruch 1 oder 2, wobei innerhalb eines radial innenliegenden ersten Bereichs von Positionen (74) des Abstützelements (16) eine Steifigkeit der Kopplung geringer ist als in einem daran angrenzenden radial weiter außen liegenden zweiten Bereich von Positionen (92), wobei die Steifigkeit der Kopplung beim Übergang von dem ersten zu dem zweiten Bereich sprunghaft ansteigt.

4.  Drehschwingungsdämpfungsanordnung (10) nach Anspruch 3, wobei innerhalb eines an den zweiten Bereich (92) angrenzenden radial außerhalb des zweiten Bereichs liegenden dritten Bereichs von Positionen (98) des Abstützelements (16) die Steifigkeit der Kopplung geringer ist als in dem zweiten Bereich (92), wobei die Steifigkeit der Kopplung beim Übergang von dem zweiten zu dem dritten Bereich sprunghaft abfällt.

5.  Drehschwingungsdämpfungsanordnung (10) nach einem der Ansprüche 3 bis 4, bei der das Abstützelement (16) einen ersten Umfangsabstützbereich (58) zum Abstützen des Rückstellelements (42) in der Umfangsrichtung (13) und einen zweiten Umfangsabstützbereich (60) zum Abstützen des Rückstellelementes (42) entgegen der Umfangsrichtung (13) aufweist, wobei der erste Umfangsabstützbereich (58) in dem ersten Bereich von Positionen des Abstützelements (16) aus einer eine Abstützung bewirkenden aktiven Position in der Umfangsrichtung (13) in eine inaktive Position überführt ist.

6.  Drehschwingungsdämpfungsanordnung (10) nach einem der Ansprüche 3 bis 5, bei der an der Trägeranordnung (12) eine Führung (14) für das Abstützelement (16) angeordnet ist, wobei sich ein Querschnitt der Führung (14) im ersten Bereich von Positionen (74) in der Umfangsrichtung (13) weitet.

7.  Drehschwingungsdämpfungsanordnung (10) nach einem der Ansprüche 5 oder 6, wobei ein den ersten Umfangsabstützbereich (58) umfassender Gelenkteil (76) des Abstützelements (16) bezüglich einem den zweiten Umfangsabstützbereich (60) umfassenden festen Teil (80) des Abstützelements (16) schwenkbar ist und mit einer in der Umfangsrichtung (13) wirkenden relativen Kraft bezüglich dem festen Teil beaufschlagt ist.

8.  Drehschwingungsdämpfungsanordnung (10) nach einem der Ansprüche 3 bis 7, wobei eine Ausdehnung des Rückstellelements (42) in der Umfangsrichtung (13) innerhalb des ersten Bereichs von Positionen (74) des Abstützelements (16) geringer ist als innerhalb des zweiten Bereichs von Positionen (92).

9.  Drehschwingungsdämpfungsanordnung (10) nach einem der Ansprüche 4 bis 8, wobei innerhalb des dritten Bereichs von Positionen (98) des Abstützelements (16) die Ausdehnung des Rückstellelements (42) in der Umfangsrichtung (13) geringer ist als innerhalb des zweiten Bereichs (92).

10. Drehschwingungsdämpfungsanordnung (10) nach einem der Ansprüche 8 oder 9, wobei innerhalb des ersten und/oder innerhalb des dritten Bereichs eine axiale Ausdehnung des Rückstellelements (42) gegenüber derjenigen im zweiten Bereich (92) derart erhöht ist, dass ein Flächenträgheitsmoment des Rückstellelements (42) im zweiten Bereich (92) demjenigen im ersten und/oder dritten Bereich entspricht.

11. Drehschwingungsdämpfungsanordnung (10) nach einem der Ansprüche 3 bis 7, bei der ein Querschnitt des Rückstellelements (42) entlang der radialen Ausdehnung desselben konstant ist, wobei innerhalb des zweiten Bereichs von Positionen (92) auf wenigstens einer in der Umfangsrichtung (13) liegenden Seite des Rückstellelements (42) ein Blech (100) angeordnet ist, das derart dimensioniert ist, dass im zweiten Bereich (72) das Rückstellelement (42) über das Blech (100) an der radialen Position des Abstützelements (16) in der Umfangsrichtung (13) bezüglich der Trägeranordnung (12) abgestützt wird.

12. Drehschwingungsdämpfungsanordnung (10) nach Anspruch 11, wobei das Blech (100) sich um ein radial inneres Ende des Rückstellelements (42) herum erstreckt und dort kraft-, form-, oder stoffschlüssig befestigt ist.

13. Drehschwingungsdämpfungsanordnung (10) nach einem der Ansprüche 3 bis 12, wobei das Rückstellelement (42) ein erstes und ein zweites Teilelement (102a, b) umfasst, die drehfest mit der radial außen liegenden Auslenkungsmasse (34) gekoppelt sind, wobei sich das erste Teilelement (102a) radial nach innen durch den ersten Bereich (74) erstreckt und wobei sich das zweite Teilelement (102b) radial nach innen bis zu einer Grenze zwischen dem ersten (74) und dem zweiten Bereich (92) erstreckt.

14. Drehschwingungsdämpfungsanordnung (10) nach Anspruch 1 oder 2, wobei innerhalb eines radial innenliegenden ersten Bereichs von Positionen (74) des Abstützelements (16) eine Steifigkeit der Kopplung höher ist als in einem daran angrenzenden radial weiter außen liegenden zweiten Bereich von Positionen (92), wobei die Steifigkeit der Kopplung beim Übergang von dem ersten (74) zu dem zweiten Bereich (92) sprunghaft abfällt.

15. Drehschwingungsdämpfungsanordnung (10) nach Anspruch 14, wobei innerhalb eines an den zweiten Bereich (92) angrenzenden radial außerhalb des zweiten Bereichs (92) liegenden dritten Bereichs von Positionen (98) des Abstützelements (16) die Steifigkeit der Kopplung höher ist als in dem zweiten Bereich (92), wobei die Steifigkeit der Kopplung beim Übergang von dem zweiten (92) zu dem dritten Bereich (98) sprunghaft ansteigt.

16. Drehschwingungsdämpfungsanordnung (10) nach einem der Ansprüche 14 oder 15, wobei eine Ausdehnung des Rückstellelements (42) in der Umfangsrichtung (13) innerhalb des ersten Bereichs von Positionen (74) des Abstützelements (16) größer ist als innerhalb des zweiten Bereichs von Positionen (92).

17. Drehschwingungsdämpfungsanordnung (10) nach einem der Ansprüche 15 bis 16, wobei innerhalb des dritten Bereichs von Positionen (98) des Abstützelements (16) die Ausdehnung des Rückstellelements (42) in der Umfangsrichtung (13) größer ist als innerhalb des zweiten Bereichs (92).

18. Drehschwingungsdämpfungsanordnung (10) nach einem der Ansprüche 16 oder 17, wobei innerhalb des zweiten Bereichs (92) eine axiale Ausdehnung des Rückstellelements (42) gegenüber derjenigen im ersten und/oder dritten Bereich derart erhöht ist, dass ein Flächenträgheitsmoment des Rückstellelements (42) im zweiten Bereich (92) demjenigen im ersten und/oder dritten Bereich entspricht.

19. Drehschwingungsdämpfungsanordnung (10) nach einem der vorhergehenden Ansprüche, wobei das Abstützelement (16) entgegen der radialen Richtung (90) mit einer Vorspannkraft beaufschlagt und in der radialen Richtung (90) unter dem Einfluss einer rotationsbedingten Fliehkraft nach außen beweglich ist.

20. Drehschwingungsdämpfungsanordnung (10) nach einem der vorhergehenden Ansprüche, wobei das Rückstellelement (42) eine Rückstellfeder, vorzugsweise eine in Umfangsrichtung elastisch deformierbare Blatt- oder Stabfeder umfasst.

21. Drehschwingungsdämpfungsanordnung (10) nach einem der vorhergehenden Ansprüche, die eine Mehrzahl von sich radial erstreckenden elastisch deformierbaren Rückstellelementen (42) umfasst, mittels derer die Trägeranordnung (12) und die Auslenkungsmasse (34) relativ zueinander verdrehbar gekoppelt sind, **dadurch gekennzeichnet, dass** zumindest einem ersten Rückstellelement (42) eines ersten Schalttyps ein erstes radial relativ zu dem ersten Rückstellelement (42) bewegliches Abstützelement (16) zugeordnet ist, mittels dessen das erste Rückstellelement (42) an einer radialen Position des ersten Abstützelements (16) in der Umfangsrichtung bezüglich der Trägeranordnung (12) abgestützt wird, wobei eine Steifigkeit der von dem ersten Rückstellelement (42) in der Umfangsrichtung bewirkten Kopplung zwischen der Trägeranordnung (12) und der Auslenkungsmasse (34) an zumindest einer radialen Position des ersten Abstützelements (16) einen unstetigen Verlauf hat; und

zumindest einem zweiten Rückstellelement (42) eines zweiten Schalttyps ein zweites radial relativ zu dem zweiten Rückstellelement (42) bewegliches zweites Abstützelement (16) zugeordnet ist, mittels dessen das zweite Rückstellelement (42) an einer radialen Position des zweiten Abstützelements (16) entgegen der Umfangsrichtung bezüglich der Trägeranordnung (12) abgestützt wird, wobei eine Steifigkeit der von dem zweiten Rückstellelement (42) entgegen der Umfangsrichtung bewirkten Kopplung zwischen der Trägeranordnung (12) und der Auslenkungsmasse (34) an zumindest einer radialen Position des zweiten Abstützelements (16) einen unstetigen Verlauf hat, wobei sich die zumindest eine radiale Position des ersten Abstützelements (16) und die zumindest eine radiale Position des zweiten Abstützelements (16) entsprechen.

22. Drehschwingungsdämpfungsanordnung (10) nach Anspruch 21, wobei eine Anzahl von Rückstellelementen (42) des ersten Schalttyps einer Anzahl von Rückstellelementen (42) des zweiten Schalttyps entspricht.

23. Drehschwingungsdämpfungsanordnung (10) nach Anspruch 21 oder 22, wobei jeweils eine identische Zahl von Rückstellelementen (42) des ersten Schalttyps und des zweiten Schalttyps mit einer gemeinsamen Auslenkungsmasse (34) gekoppelt sind.

24. Drehschwingungsdämpfungsanordnung (10) nach einem der Ansprüche 21 bis 23, wobei alle Rückstellelemente (42) mit einer gemeinsamen Auslenkungsmasse (34) gekoppelt sind.

25. Antriebsstrang für ein Fahrzeug, umfassend wenigstens eine Drehschwingungsdämpfungsanordnung (10) nach einem der vorhergehenden Ansprüche.

26. Antriebsstrang nach Anspruch 25, **dadurch gekennzeichnet, dass** der Antriebsstrang ein Anfahrelement, vorzugsweise einen hydrodynamischen Drehmomentwandler (150) oder eine Fluidkupplung oder eine nasslaufende Reibungskupplung oder eine Trockenreibungskupplung umfasst, wobei die wenigstens eine Drehschwingungsdämpfungsanordnung (10) im Bereich des Anfahrelements vorgesehen ist.

27. Antriebsstrang nach Anspruch 25 oder 26, wobei der Antriebsstrang wenigstens einen Drehschwingungsdämpfer (110, 112) mit einer Primärseite (172) und einer gegen die Rückstellwirkung einer Federanordnung (180, 184) bezüglich der Primärseite drehbaren Sekundärseite (182) umfasst, wobei die Trägeranordnung (12) der wenigstens einen Drehschwingungsdämpfungsanordnung (112) drehfest an die Sekundärseite (182) des Drehschwingungsdämpfers (112) angebunden ist.

28. Antriebsstrang nach Anspruch 27, **dadurch gekennzeichnet, dass** der wenigstens eine Drehschwingungsdämpfer (110, 112) eine erste (180) und eine zweite (184) Federanordnungen aufweist, wobei ein Zwischenelement (174, 176) gegen die Rückstellwirkung der ersten Federanordnung (180) bezüglich der Primärseite (172) drehbar ist und die Sekundärseite gegen die Rückstellwirkung der zweiten Federanordnung (184) bezüglich dem Zwischenelement (172) drehbar ist.

29. Antriebsstrang nach Anspruch 28, wobei die Trägeranordnung (12) der wenigstens einen Drehschwingungsdämpfungsanordnung (10) drehfest an das Zwischenelement (172) des Drehschwingungsdämpfers (132) angebunden ist.

30. Antriebsstrang für ein Fahrzeug nach einem der Ansprüche 25 bis 29, wobei der Antrieb durch einen Verbrennungsmotor mit Zylinderabschaltung erfolgt.

**Claims**

1. Torsional vibration damper assembly (10), in particular for a drive train of a vehicle, comprising:

a carrier arrangement (12) which can rotate about a rotational axis;
a deflection mass (34) which can move in a circumferential direction (13) relative to the carrier arrangement (12);
at least one elastically deformable resetting element (42) which extends radially and by means of which the carrier arrangement (12) and the deflection mass (34) are coupled so as to be rotatable relative to one another;
a supporting element (16) which is assigned to the resetting element (42), can move radially relative to the resetting element (42) and by means of which the resetting element (42) is supported at a radial position of the supporting element (16), in the circumferential direction (13) with respect to the carrier arrangement (12);

**characterized in that**

rigidity of the coupling brought about in the circumferential direction (13) by the resetting element (42), between the carrier arrangement (12) and the deflection mass (34), has a discontinuous profile at at least one radial position of the supporting element (16).

2. Torsional vibration damper assembly (10) according to Claim 1, in which the support of the resetting element (42) with respect to the carrier arrangement (12) is cancelled at the radial position of the supporting element (16).

3. Torsional vibration damper assembly (10) according to Claim 1 or 2, wherein rigidity of the coupling is lower within a radially inner first region of positions (74) of the supporting element (16) than in an adjoining second region of positions (92) which lies further outward radially, wherein the rigidity of the coupling increases discontinuously at the transition from the first region to the second region.

4. Torsional vibration damper assembly (10) according to Claim 3, wherein the rigidity of the coupling is lower within a third region of positions (98) of the supporting element (16), which adjoins the second region (92) and lies radially outside the second region, than in the second region (92), wherein the rigidity of the coupling drops discontinuously at the transition from the second region to the third region.

5. Torsional vibration damper assembly (10) according to one of Claims 3 to 4, in which the supporting element (16) has a first circumferential supporting region (58) for supporting the resetting element (42) in the circumferential direction (13) and a second circumferential supporting region (60) for supporting the resetting element (42) counter to the circumferential direction (13), wherein in the first region of positions of the supporting element (16) the first circumferential supporting region (58) is moved from an active position, which brings about support, in the circumferential direction (13) into an inactive position.

6. Torsional vibration damper assembly (10) according to one of Claims 3 to 5, in which a guide (14) for the supporting element (16) is arranged at the carrier arrangement (12), wherein a cross section of the guide (14) widens in the circumferential direction (13) in the first region of positions (74).

7. Torsional vibration damper assembly (10) according to one of Claims 5 and 6, wherein a joint part (76), comprising the first circumferential supporting region (58), of the supporting element (16) can pivot with respect to a fixed part (80), comprising the second circumferential supporting region (60), of the supporting element (16), and a relative force acting in the circumferential direction (13) with respect to the fixed part is applied to said fixed part.

8. Torsional vibration damper assembly (10) according to one of Claims 3 to 7, wherein an extent of the resetting element (42) in the circumferential direction (13) is smaller within the first region of positions (74) of the supporting element (16) than within the second region of positions (92).

9. Torsional vibration damper assembly (10) according to one of Claims 4 to 8, wherein the extent of the resetting element (42) in the circumferential direction (13) is smaller within the third region of positions (98) of the supporting element (16) than within the second region (92).

10. Torsional vibration damper assembly (10) according to one of Claims 8 and 9, wherein an axial extent of the resetting element (42) with respect to that in the second region (92) is increased within the first and/or within the third region in such a way that a geometrical moment of inertia of the resetting element (42) in the second region (92) corresponds to that in the first and/or third region.

11. Torsional vibration damper assembly (10) according to one of Claims 3 to 7, in which a cross section of the resetting element (42) is constant along the radial extent thereof, wherein a piece of sheet metal (100) is arranged within the second region of positions (92), on at least one side of the resetting element (42) lying in the circumferential direction (13), which piece of sheet metal (100) is dimensioned in such a way that in the second region (72) the resetting element (42) is supported via the piece of sheet metal (100) at the radial position of the supporting element (16) in the circumferential direction (13) with respect to the carrier arrangement (12).

12. Torsional vibration damper assembly (10) according to Claim 11, wherein the piece of sheet metal (100) extends around a radially inner end of the resetting element (42) and is fastened there in a frictionally locking, positively locking or materially joined fashion.

13. Torsional vibration damper assembly (10) according to one of Claims 3 to 12, wherein the resetting element (42) comprises a first and a second partial element (102a, b) which are coupled in a rotationally fixed fashion to the radially outer deflection mass (34), wherein the first partial element (102a) extends radially inward through the first region (74), and wherein the second partial element (102b) extends radially inward as far as a boundary between the first region (74) and the second region (92).

**14.** Torsional vibration damper assembly (10) according to Claim 1 or 2, wherein rigidity of the coupling is higher within a radially inner first region of positions (74) of the supporting element (16) than in an adjoining second region of positions (92) which lies further outward radially, wherein the rigidity of the coupling drops discontinuously at the transition from the first region (74) to the second region (92).

**15.** Torsional vibration damper assembly (10) according to Claim 14, wherein the rigidity of the coupling is higher within a third region of positions (98) of the supporting element (16), which adjoins the second region (92) and lies radially outside the second region (92), than in the second region (92), wherein the rigidity of the coupling increases discontinuously at the transition from the second region (92) to the third region (98).

**16.** Torsional vibration damper assembly (10) according to one of Claims 14 and 15, wherein an extent of the resetting element (42) in the circumferential direction (13) is larger within the first region of positions (74) of the supporting element (16) than within the second region of positions (92).

**17.** Torsional vibration damper assembly (10) according to one of Claims 15 to 16, wherein the extent of the resetting element (42) in the circumferential direction (13) is larger within the third region of positions (98) of the supporting element (16) than within the second region (92).

**18.** Torsional vibration damper assembly (10) according to one of Claims 16 and 17, wherein an axial extent of the resetting element (42) with respect to that in the first and/or third region is increased within the second region (92) in such a way that a geometrical moment of inertia of the resetting element (42) in the second region (92) corresponds to that in the first and/or third region.

**19.** Torsional vibration damper assembly (10) according to one of the preceding claims, wherein the supporting element (16) is acted on by a prestressing force counter to the radial direction (90), and can move outward in the radial direction (90) under the influence of a rotationally conditioned centrifugal force.

**20.** Torsional vibration damper assembly (10) according to one of the preceding claims, wherein the resetting element (42) comprises a resetting spring, preferably a leafspring or rod spring which can deform elastically in the circumferential direction.

**21.** Torsional vibration damper assembly (10) according to one of the preceding claims, which comprises a multiplicity of radially extending elastically deformable resetting elements (42), by means of which the carrier arrangement (12) and the deflection mass (34) are coupled so as to be rotatable relative to one another, **characterized in that**
at least one first resetting element (42) of a first switching type is assigned a first supporting element (16) which can move radially relative to the first resetting element (42) and by means of which the first resetting element (42) is supported at a radial position of the first supporting element (16) in the circumferential direction with respect to the carrier arrangement (12), wherein rigidity of the coupling brought about in the circumferential direction by the first resetting element (42), between the carrier arrangement (12) and the deflection mass (34), has a discontinuous profile at at least one radial position of the first supporting element (16); and at least one second resetting element (42) of a second switching type is assigned a second supporting element (16) which can move radially relative to the second resetting element (42) and by means of which the second resetting element (42) is supported at a radial position of the second supporting element (16) counter to the circumferential direction with respect to the carrier arrangement (12), wherein rigidity of the coupling brought about counter to the circumferential direction by the second resetting element (42), between the carrier arrangement (12) and the deflection mass (34), has a discontinuous profile at at least one radial position of the second supporting element (16), wherein the at least one radial position of the first supporting element (16) and the at least one radial position of the second supporting element (16) correspond.

**22.** Torsional vibration damper assembly (10) according to Claim 21, wherein a number of resetting elements (42) of the first switching type corresponds to a number of resetting elements (42) of the second switching type.

**23.** Torsional vibration damper assembly (10) according to Claim 21 or 22, wherein in each case an identical number of resetting elements (42) of the first switching type and of the second switching type are coupled to a common deflection mass (34).

**24.** Torsional vibration damper assembly (10) according to one of Claims 21 to 23, wherein all the resetting elements (42) are coupled to a common deflection mass (34).

**25.** Drive train for a vehicle, comprising at least one torsional vibration damper assembly (10) according to one of the preceding claims.

**26.** Drive train according to Claim 25, **characterized in that** the drive train comprises a starter element, preferably a hydrodynamic torque converter (150) or a fluid clutch or a wet-running friction clutch or a dry friction clutch, wherein the at least one torsional vibration damper assembly (10) is provided in the region of the starter element.

27. Drive train according to Claim 25 or 26, wherein the drive train comprises at least one torsional vibration damper (110, 112) with a primary side (172) and a secondary side (182) which can rotate with respect to the primary side, counter to the resetting effect of a spring arrangement (180, 184), wherein the carrier arrangement (12) of the at least one torsional vibration damper assembly (112) is connected in a rotationally fixed fashion to the secondary side (182) of the torsional vibration damper (112).

28. Drive train according to Claim 27, **characterized in that** the at least one torsional vibration damper (110, 112) has a first spring arrangement (180) and a second spring arrangement (184), wherein an intermediate element (174, 176) can rotate with respect to the primary side (172), counter to the resetting effect of the first spring arrangement (180), and the secondary side can rotate with respect to the intermediate element (172), counter to the resetting effect of the second spring arrangement (184).

29. Drive train according to Claim 28, wherein the carrier arrangement (12) of the at least one torsional vibration damper assembly (10) is connected in a rotationally fixed fashion to the intermediate element (172) of the torsional vibration damper (132).

30. Drive train for a vehicle according to one of Claims 25 to 29, wherein the drive is provided by an internal combustion engine with cylinder shut-off means.

**Revendications**

1. Dispositif amortisseur de vibrations de torsion (10), notamment pour une chaîne cinématique d'un véhicule, comprenant :

    un agencement de support (12) pouvant tourner autour d'un axe de rotation ;
    une masse de déviation (34) à mobilité relative dans une direction circonférentielle (13) par rapport à l'agencement de support (12) ;
    au moins un élément de rappel (42) déformable de façon élastique s'étendant dans le plan radial et à l'aide duquel l'agencement de support (12) et la masse de déviation (34) sont couplés de façon à pouvoir se tordre l'un par rapport à l'autre ;
    un élément d'appui (16) associé à l'élément de rappel (42), mobile dans le plan radial par rapport à l'élément de rappel (42) et à l'aide duquel l'élément de rappel (42) est soutenu, au niveau d'une position radiale de l'élément d'appui (16), dans la direction circonférentielle (13) par rapport à l'agencement de support (12) ;

    **caractérisé en ce que** :

    une rigidité du couplage provoqué par l'élément de rappel (42) dans la direction circonférentielle (13), entre l'agencement de support (12) et la masse de déviation (34), a une trajectoire brusque au niveau d'au moins une position radiale de l'élément d'appui (16).

2. Dispositif amortisseur de vibrations de torsion (10) selon la revendication 1, dans lequel le soutien de l'élément de rappel (42) par rapport à l'agencement de support (12) est retiré au niveau de la position radiale de l'élément d'appui (16).

3. Dispositif amortisseur de vibrations de torsion (10) selon la revendication 1 ou 2, une rigidité du couplage étant davantage réduite à l'intérieur d'une première région de positions (74) de l'élément d'appui (16) située à l'intérieur dans le plan radial que dans une deuxième région de positions (92) connexe située plus à l'extérieur dans le plan radial, la rigidité du couplage augmentant brusquement lors de la transition de la première à la deuxième région.

4. Dispositif amortisseur de vibrations de torsion (10) selon la revendication 3, la rigidité du couplage étant plus réduite à l'intérieur d'une troisième région de positions (98) de l'élément d'appui (16) connexe à la deuxième région (92) et située à l'extérieur de la deuxième région dans le plan radial que dans la deuxième région (92), la rigidité du couplage baissant brusquement lors de la transition de la deuxième à la troisième région.

5. Dispositif amortisseur de vibrations de torsion (10) selon l'une quelconque des revendications 3 à 4, dans lequel l'élément d'appui (16) comporte une première région d'appui périphérique (58) pour soutenir l'élément de rappel (42) dans la direction circonférentielle (13) et une deuxième région d'appui périphérique (60) pour soutenir l'élément de rappel (42) à l'encontre de la direction circonférentielle (13), dans lequel la première région d'appui périphérique (58) est amenée dans une position inactive dans première région de positions de l'élément d'appui (16) à partir d'une position de soutien actif dans la direction circonférentielle (13).

6. Dispositif amortisseur de vibrations de torsion (10) selon l'une quelconque des revendications 3 à 5, dans lequel un guide (14) prévu pour l'élément d'appui (16) est disposé au niveau de l'agencement de support (12), une section transversale du guide (14) s'élargissant dans la direction circonférentielle (13) dans la première région de positions (74).

7. Dispositif amortisseur de vibrations de torsion (10) selon l'une quelconque des revendications 5 ou 6, une partie articulée (76) de l'élément d'appui (16) comprenant la première région d'appui périphérique (58) pouvant pivoter par rapport à une partie (80) de l'élément d'appui (16) fixe comprenant la deuxième région d'appui périphérique (60) et étant chargée avec une force relative agissant dans la direction circonférentielle (13) par rapport à la partie fixe.

8. Dispositif amortisseur de vibrations de torsion (10) selon l'une quelconque des revendications 3 à 7, un allongement de l'élément de rappel (42) dans la direction circonférentielle (13) étant plus réduit à l'intérieur de la première région de positions (74) de l'élément d'appui (16) qu'à l'intérieur de la deuxième région de positions (92).

9. Dispositif amortisseur de vibrations de torsion (10) selon l'une quelconque des revendications 4 à 8, l'allongement de l'élément de rappel (42) dans la direction circonférentielle (13) étant plus réduit à l'intérieur de la troisième région de positions (98) de l'élément d'appui (16) qu'à l'intérieur de la deuxième région (92).

10. Dispositif amortisseur de vibrations de torsion (10) selon l'une quelconque des revendications 8 ou 9, un allongement axial de l'élément de rappel (42) par rapport à celui présent dans la deuxième région (92) étant augmenté de telle sorte à l'intérieur de la première et/ou à l'intérieur de la troisième région qu'un moment d'inertie de zone de l'élément de rappel (42) dans la deuxième région (92) correspond à celui de la première et/ou de la troisième région.

11. Dispositif amortisseur de vibrations de torsion (10) selon l'une quelconque des revendications 3 à 7, dans lequel une section transversale de l'élément de rappel (42) est constante le long l'allongement radial de celui-ci, une tôle (100) étant disposée à l'intérieur de la deuxième région de positions (92) sur au moins un côté de l'élément de rappel (42) reposant dans la direction circonférentielle (13), ladite tôle étant dimensionnée de telle sorte que dans la deuxième région (72), l'élément de rappel (42) est soutenu via la tôle (100) au niveau de la position radiale de l'élément d'appui (16) dans la direction circonférentielle (13) par rapport à l'agencement de support (12).

12. Dispositif amortisseur de vibrations de torsion (10) selon la revendication 11, la tôle (100) s'étendant autour d'une extrémité intérieure dans le plan radial de l'élément de rappel (42) et y étant fixée par complémentarité de forces, formes ou matières.

13. Dispositif amortisseur de vibrations de torsion (10) selon l'une quelconque des revendications 3 à 12, l'élément de rappel (42) comprenant une premier et un deuxième élément partiel (102a, b) couplés solidairement en rotation à la masse de déviation (34) reposant à l'extérieur dans le plan radial, le premier élément partiel (102a) s'étendant vers l'intérieur dans le plan radial à travers la première région (74) et le deuxième élément partiel (102b) s'étendant vers l'intérieur dans le plan radial jusqu'à une limite située entre la première (74) et la deuxième région (92).

14. Dispositif amortisseur de vibrations de torsion (10) selon la revendication 1 ou 2, une rigidité du couplage étant supérieure à l'intérieur d'une première région de positions (74) de l'élément d'appui (16) reposant à l'intérieur dans le plan radial que dans une deuxième région de positions (92) située plus à l'extérieur dans le plan radial et connexe à elle, la rigidité du couplage baissant brusquement lors de la transition de la première (74) à la deuxième région (92).

15. Dispositif amortisseur de vibrations de torsion (10) selon la revendication 14, la rigidité du couplage étant supérieure à l'intérieur d'une troisième région de positions (98) de l'élément d'appui (16) connexe à la deuxième région (92) et reposant à l'extérieur dans le plan radial de la deuxième région (92) que dans la deuxième région (92), la rigidité du couplage augmentant brusquement lors de la transition de la deuxième (92) à la troisième région (98).

16. Dispositif amortisseur de vibrations de torsion (10) selon l'une quelconque des revendications 14 ou 15, un allongement de l'élément de rappel (42) dans la direction circonférentielle (13) étant plus important à l'intérieur de la première région de positions (74) de l'élément d'appui (16) qu'à l'intérieur de la deuxième région de positions (92).

17. Dispositif amortisseur de vibrations de torsion (10) selon l'une quelconque des revendications 15 à 16, l'allongement de l'élément de rappel (42) dans la direction circonférentielle (13) étant plus important à l'intérieur de la troisième région de positions (98) de l'élément d'appui (16) qu'à l'intérieur de la deuxième région (92).

18. Dispositif amortisseur de vibrations de torsion (10) selon l'une quelconque des revendications 16 ou 17, un allongement axial de l'élément de rappel (42) par rapport à celui de la première et/ou de la troisième région étant augmenté de telle sorte à l'intérieur de la deuxième région (92) qu'un moment d'inertie de zone de l'élément de rappel (42) dans la deuxième région (92) correspond au moment de la première et/ou de la troisième région.

19. Dispositif amortisseur de vibrations de torsion (10) selon l'une quelconque des revendications précédentes, l'élément d'appui (16) étant chargé à l'encontre de la direction radiale (90) avec une force de précontrainte et étant mobile vers l'extérieur dans la direction radiale (90) sous l'influence d'une force centrifuge provoquée par la rotation.

20. Dispositif amortisseur de vibrations de torsion (10) selon l'une quelconque des revendications précédentes, l'élément de rappel (42) comprenant un ressort de rappel, de préférence un ressort à lame ou à tige déformable de façon élastique dans la direction circonférentielle.

21. Dispositif amortisseur de vibrations de torsion (10) selon l'une quelconque des revendications précédentes, comprenant une pluralité d'éléments de rappel (42) déformables de façon élastique, s'étendant dans le plan radial et à l'aide desquels l'agencement de support (12) et la masse de déviation (34) sont couplés de façon à être tordus l'un par rapport à l'autre, **caractérisé en ce que** :

un premier élément d'appui (16) mobile dans le plan radial par rapport au premier élément de rappel (42) étant associé à au moins un premier élément de rappel (42) d'un premier type de connexion, le premier élément de rappel (42) étant soutenu à l'aide dudit élément d'appui au niveau d'une position radiale du premier élément d'appui (16) dans la direction circonférentielle par rapport à l'agencement de support (12), une rigidité du couplage provoqué par le premier élément de rappel (42) dans la direction circonférentielle ayant une trajectoire non constante entre l'agencement de support (12) et la masse de déviation (34) au niveau d'au moins une position radiale du premier élément d'appui (16) ; et un deuxième élément d'appui (16) mobile dans le plan radial par rapport au deuxième élément de rappel (42) est associé à au moins un deuxième élément de rappel (42) d'un deuxième type de connexion, le deuxième élément de rappel (42) étant soutenu à l'aide dudit élément d'appui au niveau d'une position radiale du deuxième élément d'appui (16) à l'encontre de la direction circonférentielle par rapport à l'agencement de support (12), une rigidité du couplage provoqué par le deuxième élément de rappel (42) à l'encontre de la direction circonférentielle entre l'agencement de support (12) et la masse de déviation (34) ayant une trajectoire non constante au niveau d'au moins une position radiale du deuxième élément d'appui (16), l'au moins une position radiale du premier élément d'appui (16) et l'au moins une position radiale du deuxième Élément d'appui (16) coïncidant l'une avec l'autre.

22. Dispositif amortisseur de vibrations de torsion (10) selon la revendication 21, un nombre d'éléments de rappel (42) du premier type de connexion coïncidant avec le nombre d'éléments de rappel (42) du deuxième type de connexion.

23. Dispositif amortisseur de vibrations de torsion (10) selon la revendication 21 ou 22, un nombre identique d'éléments de rappel (42) du premier type de connexion et du deuxième type de connexion étant respectivement couplés à une masse de déviation (34) commune.

24. Dispositif amortisseur de vibrations de torsion (10) selon l'une quelconque des revendications 21 à 23, tous les éléments de rappel (42) étant couplés à une masse de déviation (34) commune.

25. Chaîne cinématique pour un véhicule, comprenant au moins un dispositif amortisseur de vibrations de torsion (10) selon l'une quelconque des revendications précédentes.

26. Chaîne cinématique selon la revendication 25, **caractérisée en ce que** la chaîne cinématique comprend un élément de démarrage, de préférence un convertisseur de couple de rotation (150) hydrodynamique ou un embrayage à fluide ou un embrayage à friction lubrifié ou un embrayage à friction à sec, l'au moins un dispositif amortisseur de vibrations de torsion (10) étant prévu dans la région de l'élément de démarrage.

27. Chaîne cinématique selon la revendication 25 ou 26, dans laquelle la chaîne cinématique comprend au moins un dispositif amortisseur de vibrations de torsion (110, 112) avec un côté principal (172) et un côté secondaire (182) pouvant tourner à l'encontre de l'action de rappel d'un agencement de ressort (180, 184) par rapport au côté principal, l'agencement de support (12) de l'au moins un dispositif amortisseur de vibrations de torsion (112) étant raccordé solidairement en rotation au côté secondaire (182) de l'amortisseur de vibrations de torsion (112).

28. Chaîne cinématique selon la revendication 27, **caractérisée en ce que** l'au moins un amortisseur de vibrations de torsion (110, 112) comporte des premier (180) et deuxième (184) agencements de ressort, un élément intermédiaire (174, 176) pouvant être tourné à l'encontre de l'action de rappel du premier agencement de ressort (180) par rapport au côté principal (172) et le côté secondaire pouvant être tourné à l'encontre de l'action de rappel du deuxième agencement de ressort (184) par rapport à l'élément intermédiaire (172).

29. Chaîne cinématique selon la revendication 28, l'agencement de support (12) de l'au moins un dispositif amortisseur de vibrations de torsion (10) étant raccordé solidairement en rotation à l'élément intermédiaire (172) de l'amortisseur de vibrations de torsion (132).

30. Chaîne cinématique pour un véhicule selon l'une quelconque des revendications 25 à 29, dans laquelle l'entraînement s'effectue par le biais d'un moteur à combustion interne avec déconnexion des cylindres.

# Fig. 1a

# Fig. 1b

13

10

28

36

40

38

32

20

34

# Fig. 1c

Fig. 1d

Fig. 1e

# Fig. 2

Fig. 3a

Fig. 3b

Fig. 4a

Fig. 4b

## Fig. 5

Fig. 6

Fig. 7

100    13

92

74

20

54

56

16

42

12

Fig. 9

54    13    58

98

16

92

42

Fig. 8

34

20

16

42

12

# Fig. 10

Fig. 11

Fig. 12

# Fig. 13

Fig. 14

EP 2 909 503 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010053542 A1